(19) Europäisches Patentamt
European Patent Office
Office européen des brevets

(11) **EP 4 258 201 A1**

(12) **EUROPEAN PATENT APPLICATION**
published in accordance with Art. 153(4) EPC

(43) Date of publication:
**11.10.2023 Bulletin 2023/41**

(21) Application number: **21900512.1**

(22) Date of filing: **26.11.2021**

(51) International Patent Classification (IPC):
**G06Q 50/04** (2012.01)   **G06F 30/18** (2020.01)
**G06F 113/14** (2020.01)

(52) Cooperative Patent Classification (CPC):
**G06F 30/18; G06Q 50/04;** G06F 2113/14

(86) International application number:
**PCT/JP2021/043466**

(87) International publication number:
**WO 2022/118758 (09.06.2022 Gazette 2022/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.12.2020 JP 2020201346**

(71) Applicant: **Plantstream Inc.
Tokyo 104-0032 (JP)**

(72) Inventors:
• **SHIMIZU Toshiyasu
Tokyo 104-0032 (JP)**
• **KUBO Tadashi
Yokohama-shi, Kanagawa 220-8765 (JP)**
• **KABESU Makoto
Yokohama-shi, Kanagawa 220-8765 (JP)**

(74) Representative: **AWA Sweden AB
Box 5117
200 71 Malmö (SE)**

(54) **PROGRAM, METHOD, AND SYSTEM**

(57) A program according to the present disclosure causes a processor to perform: receiving an arrangement of a cable path at a given location in a virtual space, the cable path indicating a spatial path in which a cable is to be arranged; receiving, from a user, an operation of arranging a first object and a second object in the virtual space, the first object being a piece of equipment having a start point, the second object being a piece of equipment having an end point; and routing the cable to two of the pieces of equipment selected from among the plurality of pieces of equipment based on the cable path and positions of the start point and the end point.

Figure 3

**Description**

**[Technical Field]**

The present disclosure relates to a program, a method, and a system.

**[Background Art]**

To build a large-scale facility such as a chemical plant, various facilities are arranged appropriately, pieces of equipment are arranged, and then routing of cables supplying electric power to the pieces of equipment is performed. Cable routing that is performed in a stage of designing a plant needs examination of various types of factors such as requirements based on position relationships among pieces of equipment constituting the plant, conditions of sizes of cables selected based on electric powers to be supplied to the pieces of equipment, and maintainability, requiring an enormous number of operations. To assist such operations, a design tool such as CAD is used to perform various types of design such as arrangement of various pieces of equipment and routing of cables.

Patent Literature 1 discloses a technique of a piping route creation apparatus that is used in a stage of designing a plant. In the technique, to improve efficiency of a process of automatically determining piping routes, positions of the piping routes are adjusted with alignment guides that serve as target positions of pipes, a plurality of piping routes are aligned, interference between pipes is avoided, and intervals of pipes are made constant.

**[Citation List]**

**[Patent Literature]**

**[Patent Literature 1]** Japanese Patent Laid-Open No. 2019-106141

**[Summary of Invention]**

**[Technical Problem]**

Cable routing in the design of a facility such as a chemical plant is performed with racks that are arranged passing between various pieces of equipment such as pumps and heat exchangers. At this time, the rack often has a tiered structure. Thus, it is necessary to examine a space where cables are arranged, for each tier of the rack. However, the routing system described in Patent Literature 1 does not support such arrangement of a space for each tier of the rack.

Therefore, the present disclosure has an objective to provide a cable routing system 1 that is capable of examining an operation of routing cables that connect various pieces of equipment for each tier of a rack.

**[Solution to Problem]**

A program according to the present disclosure causes a processor to perform: receiving an arrangement of a cable path at a given location in a virtual space, the cable path indicating a spatial path in which a cable is to be arranged; receiving, from a user, an operation of arranging a first object and a second object in the virtual space, the first object being a piece of equipment having a start point, the second object being a piece of equipment having an end point; and routing the cable to two of the pieces of equipment selected from among the plurality of pieces of equipment based on the cable path and positions of the start point and the end point.

**[Advantageous Effect of Invention]**

According to the present disclosure, an operation of routing cables that connect various pieces of equipment can be examined for each tier of a rack.

**[Brief Description of Drawings]**

[Figure 1] Figure 1 is a diagram illustrating a general configuration of a cable routing system 1.
[Figure 2] Figure 2 is a block diagram illustrating a functional configuration of a terminal device included in the cable routing system 1.

[Figure 3] Figure 3 is a diagram illustrating a functional configuration of a server included in the cable routing system 1.

[Figure 4] Figure 4 is a diagram illustrating an example of a data structure of an equipment database and a design space database that are stored in the server.

[Figure 5] Figure 5 is a diagram illustrating an example of a data structure of a cable database stored in the server.

[Figure 6] Figure 6 is a diagram illustrating design parameters that are input in the cable routing system 1.

[Figure 7] Figure 7 is a diagram illustrating types of pieces of equipment treated in the cable routing system 1.

[Figure 8] Figure 8 is a diagram illustrating an example of a data structure of a parameter information database stored in the server.

[Figure 9] Figure 9 is a diagram illustrating an example of a data structure of a rack position information database stored in the server.

[Figure 10] Figure 10 is a diagram illustrating an example of a data structure of an equipment position information database stored in the server.

[Figure 11] Figure 11 is a diagram illustrating an example of a data structure of a cable definition information database stored in the server.

[Figure 12] Figure 12 is a diagram illustrating a first half of an example of a process by the cable routing system 1.

[Figure 13] Figure 13 is a diagram illustrating a second half of the example of the process by the cable routing system 1.

[Figure 14] Figure 14 is a diagram illustrating an example of an operation screen when a layer and a region in which a cable is to be laid is specified.

[Figure 15] Figure 15 is a diagram illustrating an example of an operation screen in a state where racks and pieces of equipment are arranged in a three-dimensional space.

[Figure 16] Figure 16 is a diagram illustrating an operation screen when a cable to be routed is defined.

[Figure 17] Figure 17 is a diagram illustrating an example of an operation screen on a terminal device 10 when a cable path is set.

[Figure 18] Figure 18 is a diagram illustrating an example of an operation screen in an editing process of a tray layout.

[Figure 19] Figure 19 is a diagram illustrating an example of an operation screen when a process of the routing is performed.

[Figure 20] Figure 20 is a diagram illustrating an example of an operation screen in a process of editing a ladder path.

[Figure 21] Figure 21 is a diagram illustrating an example of an operation screen when the routing process is performed with a routing path including a section part specified.

[Figure 22] Figure 22 is a diagram illustrating an example of an operation screen on a terminal device 10 when a cable path is set in cable routing according to a modification.

[Figure 23] Figure 23 is a diagram illustrating an example of an operation screen when a process of routing is performed in the cable routing according to the modification.

## [DESCRIPTION OF EMBODIMENT]

An embodiment of the present disclosure will be described below with reference to the drawings. In the following description, the same components will be denoted by the same reference characters. The same components have the same name and the same function. Thus, the detailed description of the components will not be repeated.

<Outline>

An outline of cable routing in designing a plant, and a cable routing system 1 according to the present disclosure will be described below. The cable routing system 1 is a system for designing cables for electric power supply and cables for various types of communication for facilities for producing a chemical product through various manufacturing steps involving chemical reactions, such as a liquefied natural gas (LNG) plant and a petrochemical plant.

Facilities placed in a plant include, in a case of an LNG plant, an acid gas removal facility that removes acid gases ($H_2S$, $CO_2$, organic sulfur, etc.) contained in a source gas to be subjected to a liquefaction process, a sulfur recovery facility that recovers elemental sulfur from the removed acid gases, a water removal facility that removes water contained in the source gas, a compression facility that compresses a refrigerant used for cooling or liquefying the source gas (refrigerant mixture, propane refrigerant, etc.), and the like. Here, the facilities in the plant refers to apparatuses and pieces of equipment that are laid for purposes of the plant.

Designing such a plant includes, for example, the following steps. First, arrangement of facilities in the plant, various pieces of equipment such as pumps and heat exchangers, and frame constructions (piping racks) for passing various pipes, and routes of principal pipes are determined, a layout of the plant is designed, and an arrangement plan called a plot plan is created. Next, based on function requirements of the plant as a whole, a process unit (a series of production steps) from receiving raw materials to be used in the plant to shipment of products is planned in detail, mass/heat balance calculation is performed for each process, and a process flow called a process flow diagram (PFD) is created. Further, based on the PFD, a simulation is repeated, process calculation is revised, pipes passing between pieces of equipment in the plant and a layout of the various cables are determined (pipe routing), and a Piping and Instrument Diagram (P&ID), which is a detailed piping instrumentation diagram, is created. A cable routing system 1 according to the present disclosure is a 3D-CAD system that designs, in each of these steps, a layout of pieces of equipment, cables, and the like in the entire plant and each of the facilities in the plant, assisting creation of a process flow, pipe routing, P&ID, and the like.

<First Embodiment>

The cable routing system 1 will be described below. In the following description, for example, when a terminal device 10 accesses a server 20, the server 20 responds with information for the terminal device 10 to generate a screen. Based on the information received from the server 20, the terminal device 10 generates the screen.

<1. General Configuration of Cable Routing System 1>

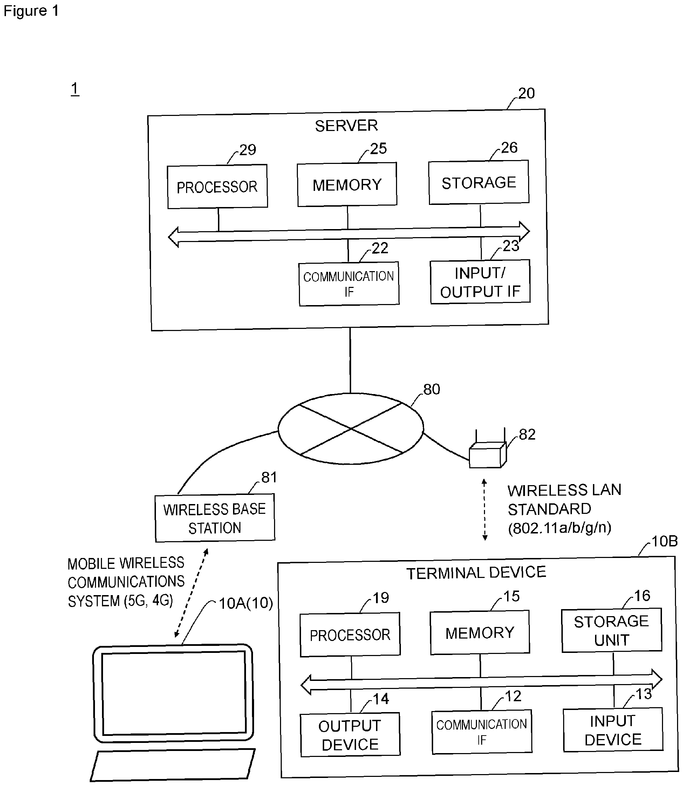

Figure 1 is a diagram illustrating a general configuration of the cable routing system 1. As illustrated in Figure 1, the cable routing system 1 includes a plurality of terminal devices (a terminal device 10A and a terminal device 10B, which will be collectively referred to as "terminal devices 10," are illustrated in Figure 1) and the server 20. The terminal devices 10 and the server 20 are connected together via a network 80, thus being capable of communicating with one another. The network 80 is configured as a wired or wireless network.
The terminal devices 10 are devices operated by users. Here, the users are persons who uses the terminal devices 10 to perform plant design, which is a function of the cable routing system 1. The terminal devices 10 are provided as the desktop personal computers (PCs), laptop PCs, and the like. In addition, the terminal devices 10 may be provided as portable terminals supporting mobile communications system such as tablet computers and smartphones.
The terminal devices 10 are connected to the server 20 via the network 80, thus being capable of communicating with the server 20. The terminal devices 10 are connected to the network 80 by communicating with a wireless base station 81 that supports a communications standard such as 5G and Long Term Evolution (LTE) and with a communication device such as a wireless LAN router 82 that supports a wireless local area network (LAN) standard, for example, the Institute of Electrical and Electronics Engineers (IEEE) 802.11. As illustrated as the terminal device 10B in Figure 1, the terminal devices 10 each include a communication interface (IF) 12, an input device 13, an output device 14, a memory 15, a storage 16, and a processor 19.
The communication IF 12 is an interface through which the terminal device 10 inputs and outputs signals to communicate with external equipment.
The input device 13 is an input device for receiving input operations from a user (e.g., a keyboard, a pointing device such as a touch panel, a touchpad, and a mouse, etc.).
The output device 14 is an output device for presenting information to a user (a display, a speaker, etc.).
The memory 15 is for temporarily storing, for example, a program and data to be processed by the program or the like. For example, the memory 15 is a volatile memory such as a dynamic random access memory (DRAM).
The storage 16 is a storage device for saving data. For example, the storage 16 is a flash memory or a hard disc drive (HDD).
The processor 19 is a piece of hardware for executing a set of instructions written in the program. The processor 19 is constituted by an arithmetic unit, registers, peripheral circuits, and the like.
The server 20 is an apparatus that manages information on the user, information on various pieces of equipment, and various cables and information on a virtual space that has been designed (a virtual space that is being designed is also included).
The server 20 receives, from a user, inputs of types of pieces of equipment to be arranged in the virtual space for the plant design, arrangement positions of the pieces of equipment, instructions to perform routing of pipes and cables, and the like.
Specifically, for example, a point of view (virtual camera) is set in the virtual space for the plant design, and the various pieces of equipment arranged by the instructions from the user and the routed pipes and cables are rendered based on settings of the virtual camera and displayed on the terminal device 10.
The server 20 arranges the various pieces of equipment in the virtual space based on the input types and arrangement positions of the various pieces of equipment, determines routes of the pipes and cables based on instructions from the user performing routing of pipes and cables, performs the routing in the virtual space, and displays the routes of the pipes and the cables on the terminal of the user.
The server 20 is a computer connected to the network 80. The server 20 includes a communication IF 22, an input/output IF 23, a memory 25, a storage 26, and a processor 29.
The communication IF 22 is an interface through which the server 20 inputs and outputs signals to communicate with external equipment.

The input/output IF 23 functions as an interface with an input device for receiving input operations from the users and with an output device for presenting information to the users.

The memory 25 is for temporarily storing, for example, a program and data to be processed by the program or the like. For example, the memory 25 is a volatile memory such as a dynamic random access memory (DRAM).

The storage 26 is a storage device for saving data. For example, the storage 26 is a flash memory or a hard disc drive (HDD).

The processor 29 is a piece of hardware for executing a set of instructions written in the program. The processor 29 is constituted by an arithmetic unit, registers, peripheral circuits, and the like.

<1.1 Configuration of Terminal Device 10>

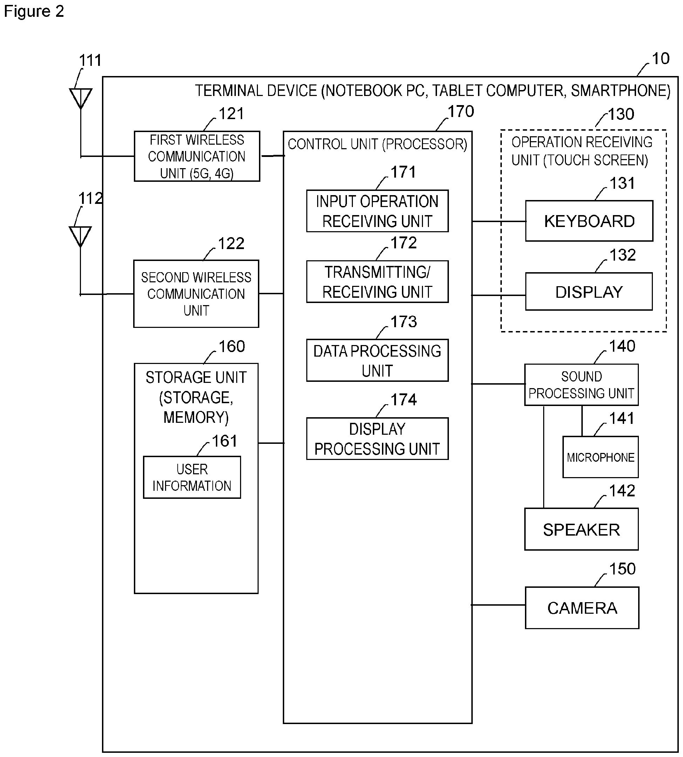

Figure 2 is a block diagram illustrating a functional configuration of the terminal device 10 included in the cable routing system 1. As illustrated in Figure 2, the terminal device 10 includes a plurality of antennas (an antenna 111 and an antenna 112), wireless communication units (a first wireless communication unit 121 and a second wireless communication unit 122) that correspond to the antennas, an operation receiving unit 130 (including a keyboard 131 and a display 132), a sound processing unit 140, a microphone 141, a speaker 142, a camera 150, a storage unit 160, and a control unit 170.

The terminal device 10 also includes functions and configurations that are not particularly illustrated in Figure 2 (e.g., a battery for retaining electric power, an electric power supply circuit that controls supply of electric power from the battery to circuits, etc.). As illustrated in Figure 2, the blocks included in the terminal device 10 are electrically connected together with buses and the like.

The antenna 111 radiates signals emitted by the terminal device 10 in the form of radio waves. The antenna 111 also receives radio waves from space and provides the received signals to the first wireless communication unit 121.

The antenna 112 radiates signals emitted by the terminal device 10 in the form of radio waves. The antenna 112 also receives radio waves from space and provides the received signals to the second wireless communication unit 122.

The first wireless communication unit 121 performs a modulation and demodulation process and the like for transmitting and receiving signals via the antenna 111 to enable the terminal device 10 to communicate with other wireless devices. The second wireless communication unit 122 performs a modulation and demodulation process and the like for transmitting and receiving signals via the antenna 112 to enable the terminal device 10 to communicate with other wireless devices. The first wireless communication unit 121 and the second wireless communication unit 122 are communication modules each including a tuner, a received signal strength indicator (RSSI) calculation circuit, a cyclic redundancy check (CRC) calculation circuit, a high-frequency circuit, and the like. The first wireless communication unit 121 and the second wireless communication unit 122 perform modulation and demodulation, and frequency conversion on wireless signals transmitted and received by the terminal device 10 and provide the received signals to the control unit 170.

The operation receiving unit 130 has a mechanism for receiving input operations from a user. Specifically, the operation receiving unit 130 includes the keyboard 131 and the display 132. Note that the operation receiving unit 130 may be configured as, for example, a touch screen including a capacitive touch panel and detects a contact position of a user to the touch panel.

The keyboard 131 receives input operations from a user of the terminal device 10. The keyboard 131 is a device for character input. The keyboard 131 outputs information on input characters to the control unit 170 in the form of input signals.

The display 132 displays data such as images, videos, and texts under control by the control unit 170. The display 132 is provided in the form of, for example, a liquid crystal display (LCD) or an organic electroluminescence (EL) display.

The sound processing unit 140 performs modulation and demodulation on sound signals. The sound processing unit 140 modulates signals provided from the microphone 141 and provides the modulated signals to the control unit 170. The sound processing unit 140 also provides the sound signals to the speaker 142.

The sound processing unit 140 is provided in the form of, for example, a processor for sound processing. The microphone 141 receives sound inputs and provides sound signals equivalent to the sound inputs to the sound processing unit 140. The speaker 142 converts sound signals provided from the sound processing unit 140 into sounds and outputs the sounds to the outside of the terminal device 10.

The camera 150 is a device for receiving light with its light receiving elements and outputs the light in the form of captured images. For example, the camera 150 is a depth camera capable of detecting a distance from the camera 150 to an imaging object.

The storage unit 160 is configured with, for example, a flash memory and stores data and programs to be used by the terminal device 10. In some situations, the storage unit 160 stores user information 161.

The user information 161 is information on users who are to use the terminal device 10 to perform plant design, which is a function of the cable routing system 1. The user information includes information for identifying users (user IDs), names of the users, organization information on companies to which the users belong, and the like.

The control unit 170 reads a program stored in the storage unit 160 and executes instructions included in the program, controlling operation of the terminal device 10. The control unit 170 is, for example, an application program that is installed in advance in the terminal device 10. Operating according to the program, the control unit 170 exercises functions as an input operation receiving unit 171, a transmitting/receiving unit 172, a data processing unit 173, and a notification control unit 174.

The input operation receiving unit 171 performs a process of receiving input operations from a user to an input device such as the keyboard 131.

The transmitting/receiving unit 172 performs a process for enabling the terminal device 10 to transmit and receive data to and from the external device such as the server 20 according to a communications protocol.

The data processing unit 173 performs a process of computing data of which an input has been received by the terminal device 10 and outputs a result of the computation to the memory or the like according to the program.

The notification control unit 174 performs a process of presenting information to a user. The notification control unit 174 performs a process of causing the display 132 to display an image to be displayed, a process of outputting sounds to the speaker 142, a process of generating vibrations in the camera 150, and the like.

<1.2 Functional Configuration of Server 20>

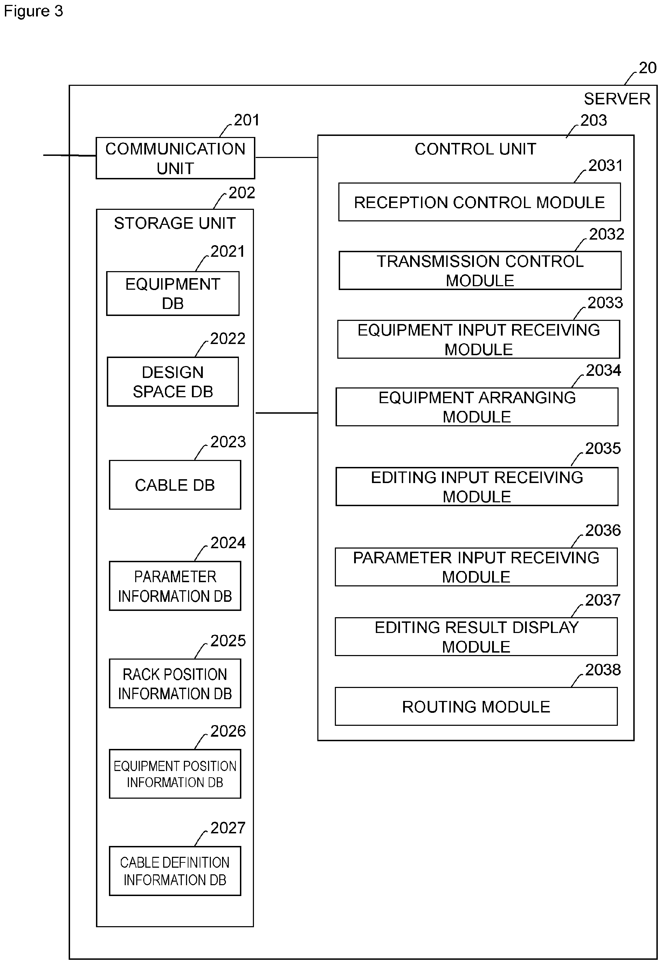

Figure 3 is a diagram illustrating a functional configuration of the server 20 included in the cable routing system 1. As illustrated in Figure 3, the server 20 exercises functions as a communication unit 201, a storage unit 202, and a control unit 203.

The communication unit 201 performs a process for enabling the server 20 to communicate with the external device.

The storage unit 202 stores data and programs to be used by the server 20. The storage unit 202 stores an equipment database 2021, a design space database 2022, a cable database 2023, a parameter information database 2024, a rack position information database 2025, an equipment position information database 2026, and a cable definition information database 2027.

The equipment database 2021 is a database for retaining information concerning various pieces of equipment to be arranged in the virtual space that is presented for the plant design in the cable routing system 1. This will be described later in detail.

The design space database 2022 is a database for retaining information on the virtual space in which a user performs the design. This will be described later in detail.

The cable database 2023 is a database for storing types of cables and types of cable trays in which cables are housed based on types of the cables.

The parameter information database 2024 is a database for retaining information on parameters for cable routing in the cable routing system 1. This will be described later in detail.

The rack position information database 2025 is a database for retaining information that indicates a rack region specified by a user from among racks arranged in a three-dimensional space when a cable is routed.

The equipment position information database 2026 is a database for retaining information concerning positions of various pieces of equipment arranged in the three-dimensional space, and the positions includes a start point and an end point of each piece of equipment. This will be described later in detail.

The cable definition information database 2027 is a database for retaining information concerning specifications of a cable to be subjected to routing defined by a user for performing cable routing. This will be described later in detail.

The control unit 203 exercises functions as various modules that include a reception control module 2031, a transmission control module 2032, an equipment input receiving module 2033, an equipment arranging module 2034, an editing input receiving module 2035, a parameter input receiving module 2036, an editing result display module 2037, and a routing module 2038 when the processor of the server 20 performs processing according to programs.

The reception control module 2031 controls a process in which the server 20 receives signals from the external device according to the communications protocol.

The transmission control module 2032 controls a process in which the server 20 transmits signals to the external device according to the communications protocol.

The equipment input receiving module 2033 controls a process of receiving, from a user, operations of inputting types of the various pieces of equipment to be arranged in the virtual space for performing the plant design with the cable routing system 1, and inputting positions of the various pieces of equipment to be arranged in the virtual space.

When a user uses the terminal device 10 to perform the plant design, the virtual space that simulates an actual site on which the plant design is performed is displayed on the display 132 of the terminal device 10. The user then performs prescribed operations on a screen of the display 132 to input the types of the various pieces of equipment to be arranged in the virtual space and the arrangement positions of the pieces of equipment in the virtual space, and the equipment input receiving module 2033 receives information on the input types of the various pieces of equipment and the input arrangement positions of the pieces of equipment in the virtual space.

The prescribed operations that are performed on the screen of the display 132 and received by the equipment input receiving module 2033 are, for example, operations of clicking a desired type from a plurality of patterns of lists of various pieces of equipment displayed on the screen to select the desired type and clicking a desired location in the virtual space displayed on the screen to select an arrangement position. As another example, the prescribed operations are operations of selecting a desired image from a list of images that illustrate appearances of the various pieces of equipment displayed on the screen, and dragging and moving the desired image to a desired location in the virtual space displayed on the screen to select an arrangement position. Note that such input operations do not limit the inputs of the various pieces of equipment.

The equipment arranging module 2034 controls a process of arranging and displaying, based on information on the types of the various pieces of equipment and the arrangement positions of the various pieces of equipment in the virtual space that has been received by the equipment input receiving module 2033, the various pieces of equipment in the virtual space. The information on the types of the various pieces of equipment to be arranged in the virtual space and the arrangement positions of the pieces of equipment in the virtual space is received by the prescribed operations on the terminal device 10 by the user. Thus, based on the information, the equipment arranging module 2034 arranges the various pieces of equipment at the input arrangement positions in the virtual space displayed on the display 132 of the terminal device 10, thereby displaying the pieces of equipment on the display 132 of the terminal device 10.

Here, objects indicating pieces of equipment arranged in the virtual space each include a nozzle to which pipes are to be connected, as a start point and an end point. Every object includes information on its start point and end point.

The equipment editing input receiving module 2035 controls a process of receiving an input operation of editing various pieces of equipment from a user. When the user inputs editing information for making various adjustments to at least one of various pieces of equipment displayed on the display 132 of the terminal device 10, the equipment editing input receiving module 2035 receives the input editing information on the at least one of various pieces of equipment. The editing of the various pieces of equipment is, for example, editing of a piece of equipment in any one or more of its type, shape, size, and number.

An example of the input operation of editing at least one of the various pieces of equipment by the user in the equipment editing input receiving module 2035 is an input operation of editing parameters that are set to at least one of the various pieces of equipment. Another example of the input operation by the user is an input operation of editing a size, a length, or the like of one of the various pieces of equipment displayed on the display 132 by dragging the one of the various pieces of equipment, and numeric values equivalent to the size or the length are received as the parameters.

The parameter input receiving module 2036 controls a process of receiving an input of various parameters for routing a cable. The various parameters include information on types of the cable, types of pieces of equipment to be connected, and the number, sizes, and arrangement of cable trays. The various parameters will be described later in detail. When performing the cable routing, a user operates the terminal device 10 to input the various parameters.

The editing result display module 2037 controls a process of changing a display form of the at least one of the various pieces of equipment and displaying the at least one of the various pieces of equipment in the virtual space based on the editing information on the at least one of the various pieces of equipment received by the equipment editing input receiving module 2035. The information on the editing of the at least one of the various pieces of equipment arranged in the virtual space, for example, information of editing a length of a pipe or a connection angle of the pipe with a piece of equipment, is received by the prescribed operations on the terminal device 10 by a user. Thus, based on the information, the editing result display module 2037 changes the display form of the at least one of the various pieces of equipment in the virtual space displayed on the display 132 of the terminal device 10. For example, the editing result display module 2037 changes an appearance of the at least one of the various pieces of equipment according to a length of an attached pipe or a connection angle of the pipe with the at least one of the various pieces of equipment that has been received. The editing result display module 2037 then displays the at least one of the various pieces of equipment on the display 132 of the terminal device 10.

The routing module 2038 controls a process of receiving, from a user, instruction operations of routing a pipe and a cable to be arranged in a plant that is to be designed with the cable routing system 1 in association with the various pieces of equipment arranged in the virtual space and performing the routing. Examples of the pipes to be arranged in the plant include a pipe for transporting source gas, a pipe for transporting absorbent solution for absorbing a component to be removed from the source gas, a pipe for transporting discharge gas, and the like, in the plant. The pipes are arranged to cause fluid such as liquid and gas to flow.

The cables to be arranged in the plant include electric power cables for supplying electric power to various pieces of equipment and communication cables used for communication between the various pieces of equipment.

For example, on a screen displayed on the display 132 of the terminal device 10, a user specifies a prescribed location of each of various pieces of equipment arranged in the virtual space, for example, an endpoint of an attached pipe of a piece of equipment, as a start position or an end position for routing, and performs an operation of issuing instructions for routing (e.g., presses a prescribed button on the screen). The routing module 2038 receives instructions on the routing from the user and performs the routing of the cables.

Note that the routing module 2038 may perform routing of pipes and cables based on detailed information that is input in the virtual space by a user (what is called manual routing) or may perform automatic routing based on starting and end points specified by a user. At this time, the automatic routing is performed according to an algorithm that determines routing directions of pipes and cables under prescribed conditions and makes pipes keep away from existing various pieces of equipment and existing pipes. Further, the routing module 2038 may be configured to route a pipe having a pipe diameter, a material, and the like that are specified with parameters input by a user or preset parameters or may be configured to suggest a pipe having a pipe diameter and a material that are optimal for a fluid to flow through the pipe.

As described above, the present embodiment has a configuration such that the server 20 receives inputs of types and arrangement positions of various pieces of equipment and instructs the terminal device 10 to display the various pieces of equipment, receives inputs of editing at least one of the various pieces of equipment and instructs the terminal device 10 to display the results of the editing, and receives instructions on pipe routing, performs the routing, and causes the terminal device 10 to display the result of the routing. However, such a configuration is not limitative.

For example, the terminal device 10 may be configured to receive inputs relating to some or all of the functions described above, process the inputs, and display the result of the process on the display 132 of the terminal device 10. To provide such a configuration, the terminal device 10 may have a configuration such that a user accesses the server 20 via the terminal device 10 to install a program provided by the server 20 in the terminal device 10, and the terminal device 10 performs the process. In this case, the server 20 need not include, as its functions, some or all of the equipment input receiving module 2033, the equipment arranging module 2034, the equipment editing input receiving module 2035, the parameter input receiving module 2036, the editing result display module 2037, and the routing module 2038.

<3. Data Structure>

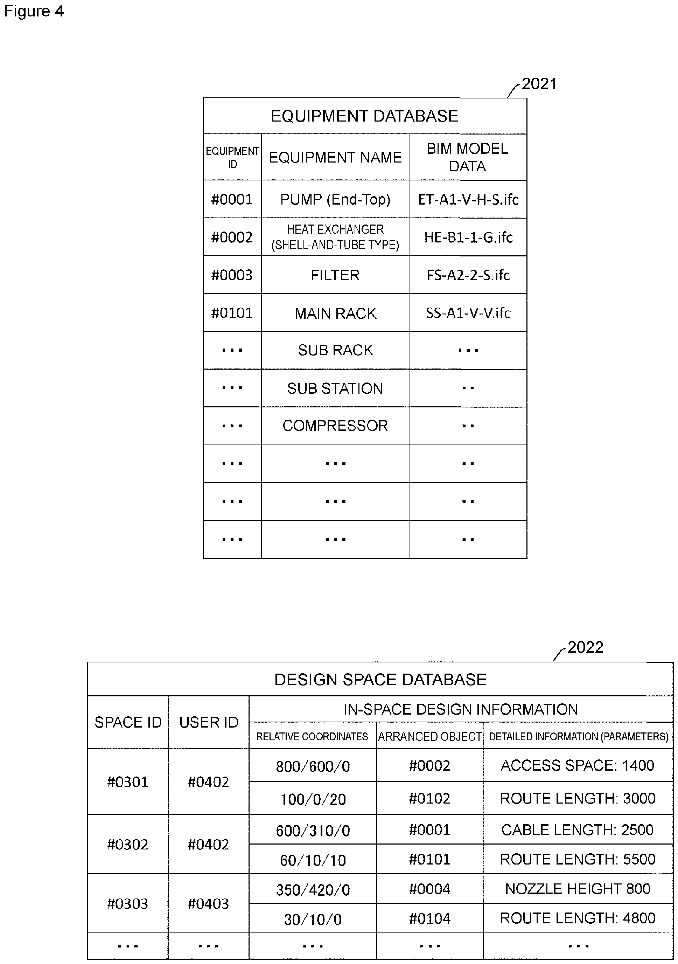

Figure 4 is a diagram illustrating an example of data structures of the equipment database 2021 and the design space database 2022 stored in the server 20.

As illustrated in Figure 4, every record of the equipment database 2021 includes an item "Equipment ID", an item "Equipment name", an item "BIM model data", and the like.

The item "Equipment ID" is information for identifying types of various pieces of equipment that can be arranged in the virtual space in the cable routing system 1.

The item "name" is a name that indicates a type of an individual piece of the various pieces of equipment. For example, information on a name that indicates a type such as a pump, a heat exchanger, a filter, a valve, and a rack is stored. Further, in the case of a pump or a heat exchanger, information indicating a model of a pump such as an end-top type or indicating a type of a heat exchanger such as a shell-and-tube type. Note that the name indicating a piece of equipment may be a code specified based on a prescribed standard or the like or may be a model number or the like specified by a manufacturer.

The item "BIM model data" is information indicating a data name (file name) of a piece of model data arranged in the virtual space in the cable routing system 1 and is a piece of model data to be used in a 3D-CAD system. The 3D-CAD system provided by the server 20 builds a three-dimensional virtual space and performs modeling that draws shape of pieces of equipment in the three-dimensional virtual space. The 3D-CAD system further sets a point of view (virtual camera) in the virtual space and renders these pieces of equipment based on settings of the virtual camera. Every piece of model data stored in the item "BIM model data" is a piece of model data used for rendering an actual piece of equipment from a point of view of a given virtual camera.

Every record of the design space database 2022 includes an item "Space ID", an item "User ID", an item "In-space piping information", and the like.

The item "Space ID" is information for identifying each piece of information on a virtual space designed with the cable routing system 1 by a user.

The item "User ID" is information for identifying each user who uses the cable routing system 1. Note that the item "user ID" may store information for identifying a plurality of users, as shown in an example in which the item "Space ID" is "#0302." This is for enabling a plurality of users to design and share one virtual space. Information on the item "In-space piping information," which will be described later, may be stored in association with each user.

The item "In-space piping information" is information concerning a block pattern, an individual piece of equipment, a routed pipe arranged in the virtual space by a user with the cable routing system 1. Specifically, the item "In-space piping information" includes an item "Relative coordinates," an item "Arranged object," and an item "Detailed information (parameters)," and the like.

The item "Relative coordinates" is information indicating a relative position in the virtual space of a piece of equipment or a cable arranged in the virtual space. For example, the item "Relative coordinates" stores coordinate data on three-dimensional coordinates in the virtual space. The relative coordinates are, for example, relative coordinates of a reference position of a piece of equipment (e.g., a position of a center of the piece or an endpoint of the piece in any one of six directions) in the case where the virtual space is expressed as an XYZ coordinates. However, expression of the relative coordinates is not limited to this manner.

The item "Arranged object" is information indicating a piece of equipment or a cable arranged in the virtual space and corresponds to the item "Equipment ID" in the equipment database 2021.

The item "Detailed information (parameters)" is editing information on editing of a piece of equipment or a cable arranged on the virtual space or information on a routed cable. For example, the item "Detailed information" stores an editing parameter of a piece of equipment. The editing parameter of a piece of equipment is information concerning a number or a size.

The equipment input receiving module 2033 of the server 20 adds a record to or updates a record in the design space database 2022 when receiving arrangement information on a piece of equipment from each user. When receiving editing parameter information on a piece of equipment from each user, the editing input receiving module 2035 adds a record to or updates a record in the design space database 2022. When a process of the cable routing is performed, the routing module 2038 adds records to or updates records in the design space database 2022.

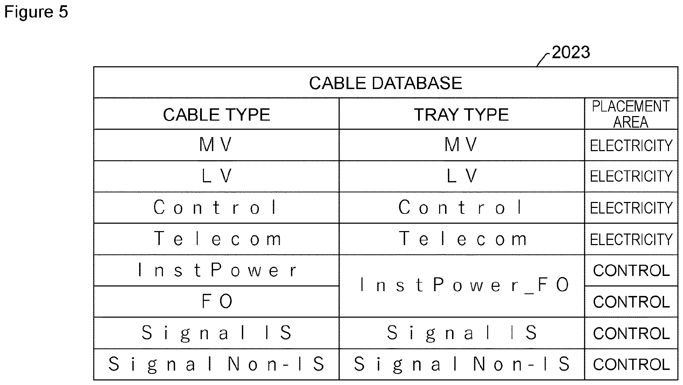

Figure 5 is a diagram illustrating an example of a data structure of the cable database 2023 stored in the server 20.

As illustrated in Figure 5, the cable database 2023 includes an item "Cable type," an item "Tray type," and an item "Placement area."

The item cable type is information indicating types of cables. Of the types, "MV" indicates a medium-voltage cable. "LV" indicates a low-voltage cable. "Control" indicates a control cable. "Telecom" indicates a communication cable. "InstPower" indicates a low-voltage cable. "FO" is information indicating a fiber optic cable. "Signal" and "Signal NonIS" indicate signal lines.

The item "Tray type" is information indicating a type of a cable tray that is determined based on a type of a cable. With a tray type, a group of cable trays that can be arranged in the same layer is categorized. Of types of cables, "InstPower" and "FO" are categorized into the same tray group.

The item "Placement area" is information indicating a placement section that is determined based on a type of a cable.

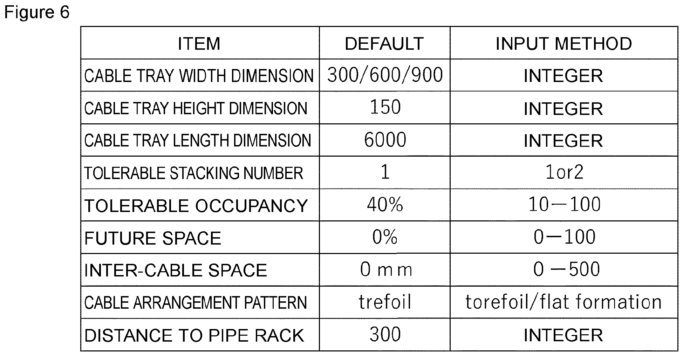

Figure 6 is a diagram illustrating design parameters that are input in the cable routing system 1.

As illustrated in Figure 6, the design parameters include an item "Cable tray width dimension," an item "Cable tray height dimension," an item " an item "Cable tray length dimension," an item "Tolerable stacking number," an item "Tolerable occupancy," an item "Future space," an item "Inter-cable space," an item "Cable arrangement pattern", and an item "Distance to rack."

The item "Cable tray width dimension" is a value indicating a selectable width of a cable tray. The value is in mm. A default value of the width is any one of 300, 600, and 900. As an input method of the width, a user inputs a desired integral value.

The item "Cable tray height dimension" is a value indicating a selectable height of a cable tray. The value is in mm. A default value of the height is 150. As an input method of the height, a user inputs a desired integral value.

The item "Cable tray length dimension" is a value indicating a selectable length of a cable tray. The value is in mm. A default value of the length is 6000. As an input method of the length, a user inputs a desired integral value.

The item "Tolerable stacking number" is a value indicating the number of cables allowed to be stacked in a cable tray. The number is dimensionless. A default value of the number is 1. As an input method of the number, a numeric value of 1 or 2 is input.

The item "Tolerable occupancy" is a value indicating a maximum value of a proportion accounted for by cables in an interior region of a cable tray (occupancy) in sectional view orthogonal to a longitudinal direction of the cable tray. The value is in %. A default value of the occupancy is 40. As an input method of the occupancy, any integral value from 10 to 100 is input.

The item "Future space" is a value indicating a proportion of a space, in sectional view of a layer of a rack, that is kept in advance in expectation of a future addition of a pipe and a cable. The value is in %. A default value of the space is 0. As an input method of the proportion, any integral value from 10 to 100 is input.

The item "Inter-cable space" is a value indicating an interval between cable trays in which cables are housed. The value is in mm. A default value of the space is 0. As an input method of the interval, any integral value from 0 to 500 is input.

The item "Cable arrangement pattern" is a value indicating an arrangement pattern of a single-core cable such as MV (high voltage) and LV (low voltage). A value of one of a Torefoil mode and a FlatFormation mode is selected. A default value of the arrangement mode is the Torefoil mode.

The item "Distance to rack" is a value indicating an interval between a rack and a cable tray. The value is in mm. The default value of the distance is 300. As an input method of the interval, any integral value is input.

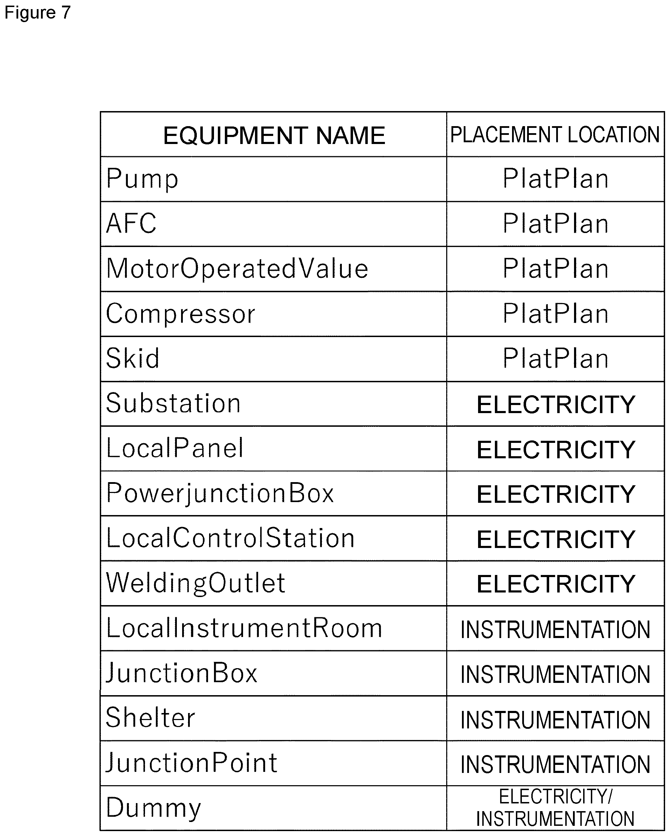

Figure 7 is a diagram illustrating types of pieces of equipment treated in the cable routing system 1.

As illustrated in Figure 7, the cable routing system 1 uses various pieces of equipment such as a pump, a compressor, a sub station, and a junction box. These pieces of equipment are arranged in placement sections that are determined based on types of the pieces of equipment.

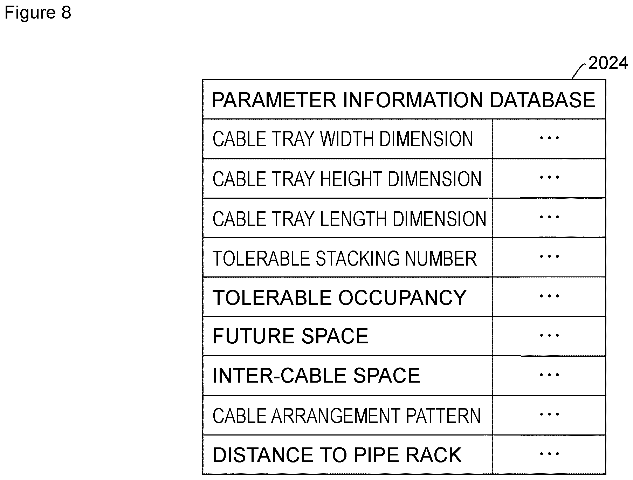

Figure 8 illustrates an example indicating a content of the parameter information database 2024. As illustrated in Figure 8, the parameter information DB includes an item "Cable tray width dimension," an item "Cable tray height dimension," an item "Cable tray length dimension," an item "Tolerable stacking number," an item "Tolerable occupancy," an item "Future space," an item "Inter-cable space," an item "Cable arrangement pattern", and an item "Distance to rack."

The content of these items conforms to the content of the design parameters described above.

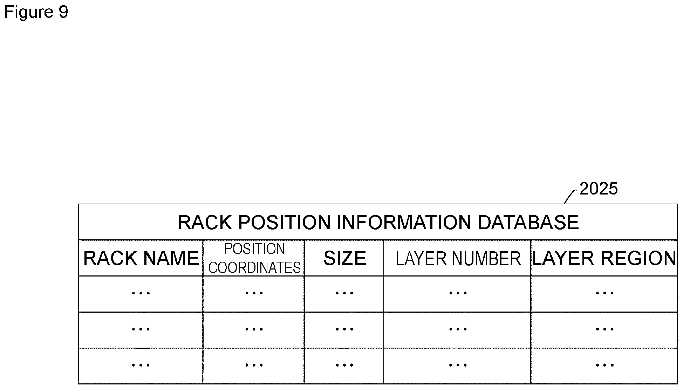

Figure 9 illustrates information indicating a content of the rack position information database 2025. As illustrated in Figure 9, the rack position information DB includes an item "Rack name," an item "Position coordinates," an item "Size," an item "Layer number," and an item "Layer region."

The item "Rack name" is information indicating a name of a rack that is specified by a user when a cable is routed.

The item "Position coordinates" is information indicating a position of an origin of a rack corresponding to a rack name in a three-dimensional space. The position in the three-dimensional space is expressed as coordinate values with respect to a base point of the three-dimensional space.

The item "Size" is information indicating a size of a rack corresponding to a rack name from its origin. As the size, dimensions in three directions orthogonal to one another are defined.

The item "Layer number" is information indicating a number of a layer of rack that is specified by a user when a cable is routed. A rack has a stacked structure in which a space for laying cables is divided in a vertical direction into layers spaced from one another. These layers are each given a layer number starting from one in an order from a lowermost tier to a topmost tier.

The item "Layer region" is information indicating a region specified in each layer by a user. A layer region is specified based on dimensions specified by the user. For example, the user specifies a layer region in a format of a range of 1500 mm from the left end of a layer. Information specified in such a format is stored in the item "Layer region."

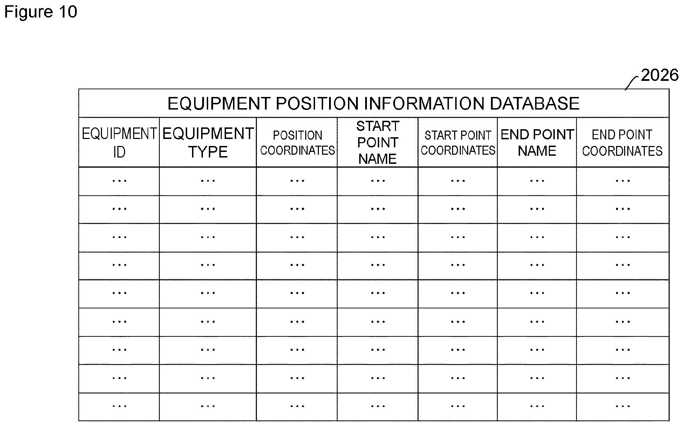

Figure 10 is a diagram illustrating an example of a data structure of the equipment position information database 2026 stored in the server 20. As illustrated in Figure 10, the equipment position information DB includes an item "Equipment ID," an item "Equipment type," an item "Position coordinates," an item "Start point name," an item "Start point coordinates," an item "End point name," and an item "End point coordinates."

The item "Equipment ID" is information for identifying pieces of equipment arranged in the three-dimensional space.

The item "Equipment type" is information indicating a type of a piece of equipment corresponding to an equipment ID.

The item "Position coordinates" is information indicating position coordinates of a piece of equipment corresponding to an equipment ID in the three-dimensional space.

The item "Start point name" is information indicating a name of a start point of a piece of equipment corresponding to an equipment ID.

The item "Start point coordinates" is information indicating position coordinates of a start point of a piece of equipment corresponding to an equipment ID in the three-dimensional space.

The item "End point name" is information indicating a name of an end point of a piece of equipment corresponding to an equipment ID.

The item "End point coordinates" is information indicating position coordinates of an end point of a piece of equipment corresponding to an equipment ID in the three-dimensional space.

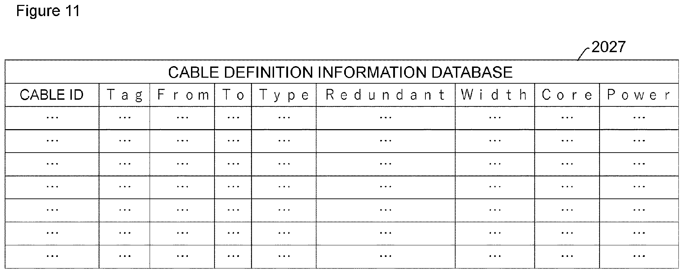

Figure 11 is a diagram illustrating an example of a data structure of the cable definition information database 2027 stored in the server 20. As illustrated in Figure 11, the cable definition information DB includes an item "ID," an item "Tag," an item "From," an item "To," an item "Type," an item "Redundant," an item "Width," an item "Core," and an item "Power."

The item "Cable ID" is information for identifying a cable.

The item "Tag" is information indicating a type of a cable corresponding to a cable ID.

The item "From" is information indicating a start point of a cable corresponding to a cable ID. An example of the information indicating a start point is information on an equipment ID of a piece of equipment that serves as the start point. Here, an object that is selected as a start point is a first object in the present invention.

The item "To" is information indicating an end point of a cable corresponding to a cable ID. An example of the information indicating an end point is information on an equipment ID of a piece of equipment that serves as the end point. Here, an object that is selected as an end point is a second object in the present invention.

The item "Type" is information indicating a type of a cable corresponding to a cable ID.

The item "Redundant" is information concerning redundancy. For example, by grouping cables of the same type into a plurality of groups, and routing cables of different groups in different paths, redundancy of the cables is ensured. In such a case, signs indicating the different groups (e.g., A, B, ...) are given to the item "Redundant."

The item "Width" is information indicating a width dimension of a cable corresponding to a cable ID.

The item "Core" is information indicating a sectional structure of a cable corresponding to a cable ID.

The item "Power" is information indicating an electric power of a cable corresponding to a cable ID.

<4. Operation>

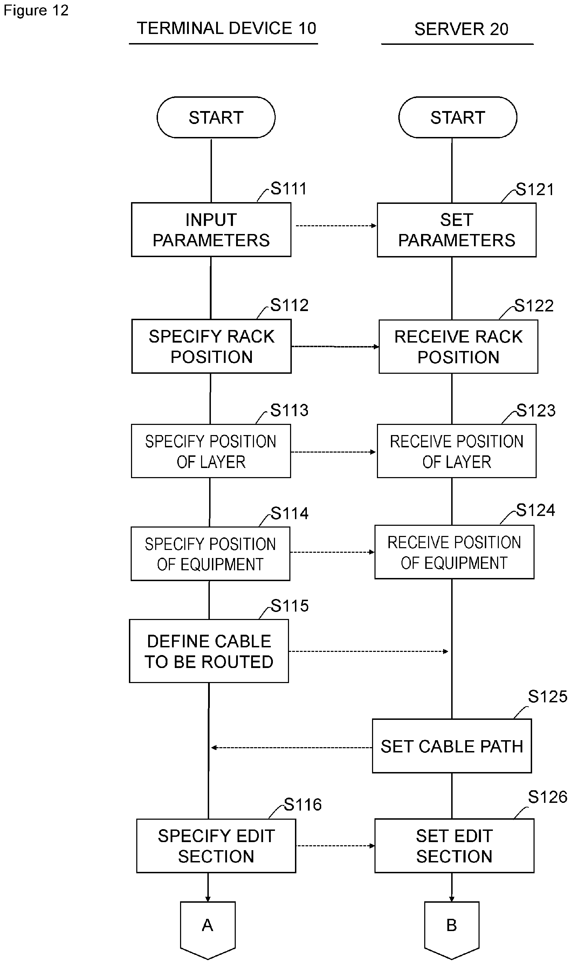

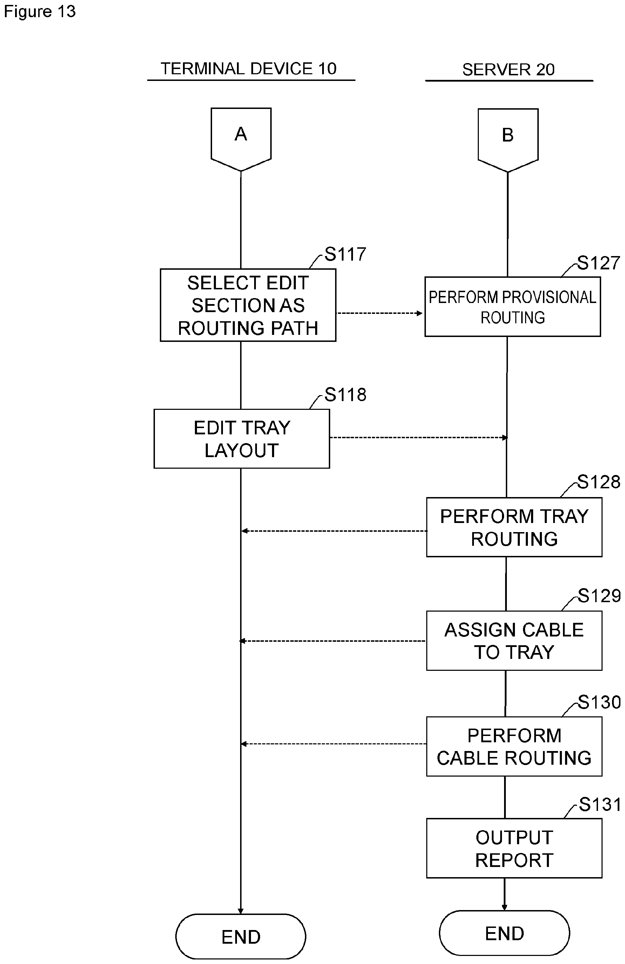

With reference to Figure 12 and Figure 13, a cable routing process by the cable routing system 1 according to the present embodiment will be described below.

Figure 12 is a flowchart illustrating a first half of an example of a flow of the cable routing process by the cable routing system 1. For example, the process is started when a user accesses to the server 20 via a Web browser on the terminal device 10 and issues instructions for receiving a plant design service provided by the server 20. At this time, a prescribed authentication may be performed on the user.

In the cable routing system 1, first, an input of parameters is received from a user (step S111). Specifically, the user operates a terminal device 10 to input various design parameters used for the design. Details of the design parameters are the items of the design parameters illustrated in Figure 6.

Based on the parameters input by the user, the server 20 sets the parameters (step S121).

In step S111, to receive inputs of the types of the various pieces of equipment to be arranged in the virtual space for performing the plant design and the arrangement positions of the various pieces of equipment in the virtual space, the control unit 203 of the server 20 transmits instructions to display the virtual space in its initial state to the terminal device 10 via the communication unit 201.

In step S111, the transmitting/receiving unit 172 of the terminal device 10 receives the instruction information transmitted from the server 20 for displaying the virtual space in its initial state. The notification control unit 174 causes the display 132 to display the virtual space in its initial state. Information on the space in its initial state may be transmitted to the terminal device 10 by the control unit 203 of the server 20 or may be stored in advance in the terminal device 10.

Next, the user operates the terminal device 10 to specify positions of racks (step S112). Specifically, in a virtual space displayed as its initial state, the user handles an object indicating the racks to arrange the racks at positions desired by the user. Sizes and types of racks can be selected or specified by a user.

After step S112, the server 20 receives information on the input types and sizes of the racks, and the specified positions of the racks in the virtual space and arranges the racks in the virtual space (step S122) .

After step S122, the user operates the terminal device 10 to specify a position of a layer in which a cable is to be laid to a rack (step S113). A cable path is a certain region in a layer of a rack in which a cable is to be laid. The cable path represents a concept that indicates a spatial path in which a cable is to be laid. Specifically, in the racks placed in the virtual space, the user specifies a position of a layer in which the cable is to be laid. The user further specifies, in the layer, a region to be occupied by the cable.

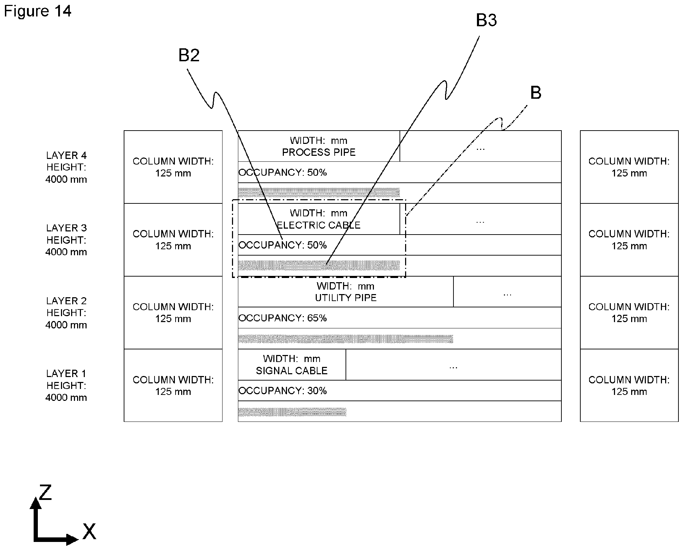

Here, an operation of specifying a layer and a region in which a cable is to be laid will be described with an example of a screen. Figure 14 is a diagram illustrating an example of an operation screen when the layer and the region in which a cable is to be laid are specified.

As illustrated in Figure 14, the operation screen displays pipes and cables housed inside a rack in sectional view orthogonal to a longitudinal direction in which the rack extends. In this figure, a structure of layers that are stacked in the rack is schematically drawn. In a region indicated with a sign B, laying an MV (middle voltage) cable is specified. On the operation screen, a dimension from an end portion of the rack can be specified to specify a region in a layer.

In addition, the operation screen displays an occupancy of each of types of cables to be arranged for each layer of the rack (sign B2). The occupancy refers to a ratio occupied by a length of a specified cable in its width direction (diameter) with respect to a length of a layer in its width direction (X direction).

By checking the occupancy, a ratio by which a pipe of a type in question can be checked.

In addition, the operation screen displays bars (sign B3) that visually represent occupancies. When an occupancy is 50%, the corresponding bar extends by a space that is half a region of a layer. By checking a bar, how much empty space is left in a layer can be intuitively grasped.

As illustrated in Figure 12, after step S113, the server 20 receives information concerning the layer and the region that have been specified by the user and in which a cable is to be laid (step S123). Specifically, the server 20 records information concerning the layer and the region in the specified rack as a new record of the rack position information DB.

After step S123, the user operates the terminal device 10 to specify positions of pieces of equipment constituting the plant (step S114). Specifically, the user handles objects corresponding to pieces of equipment to be arranged in the virtual space and arranges the pieces of equipment at given positions.

After step S114, the server 20 receives the positions of the pieces of equipment specified by the user (step S124). The server 20 then performs a process for displaying the specified pieces of equipment at their specified positions in the virtual space according to the received information.

In step S124, the input operation receiving unit 171 of the terminal device 10 receives, from the user, an input operation of the types of the various pieces of equipment and the arrangement positions of the various pieces of equipment in the virtual space. The transmitting/receiving unit 172 transmits information on the received types of the various pieces of equipment and the arrangement position of the various pieces of equipment in the virtual space, and the user information to the server 20.

In step S124, the equipment input receiving module 2033 of the server 20 receives, via the communication unit 201, information on types of various pieces of equipment and arrangement positions of the various pieces of equipment in the virtual space, and user information that are transmitted from the terminal device 10.

In step S123, based on the information on the types of the various pieces of equipment and the arrangement positions of the various pieces of equipment in the virtual space received in step S122, the equipment arranging module 2034 of the server 20 refers to the equipment database 2021 and transmits instruction information for arranging and displaying the various pieces of equipment in the virtual space to the terminal device 10 via the communication unit 201. The equipment arranging module 2034 further stores the information on the types of the various pieces of equipment and the arrangement positions of the various pieces of equipment in the virtual space that has been received, in the design space database 2022.

In step S124, the transmitting/receiving unit 172 receives the instruction information transmitted from the server 20 for arranging and displaying the various pieces of equipment in the virtual space. The notification control unit 174 arranges the various pieces of equipment in the virtual space and causes the display 132 to display the virtual space.

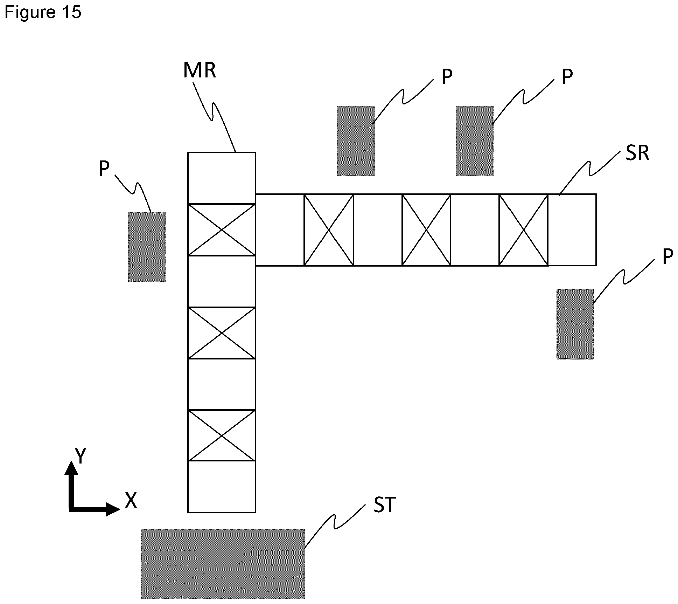

An example of the displaying on the terminal device 10 at this time is illustrated in Figure 15. Figure 15 is a diagram illustrating an example of an operation screen in a state where racks and pieces of equipment are arranged in a three-dimensional space. Note that this figure illustrates the three-dimensional space in the form of plan view from above.

As illustrated in Figure 15, the three-dimensional space has three-dimensional Cartesian coordinates. In this figure, a main rack MR, a sub rack SR, a sub station, and a plurality of pumps are illustrated.

The main rack MR has a longitudinal direction that extends in a Y direction.

The sub rack SR has a longitudinal direction that extends in an X direction.

A sub station ST is arranged at an end portion of the main rack. The sub station ST is a facility that supplies electric power to a plurality of pumps P.

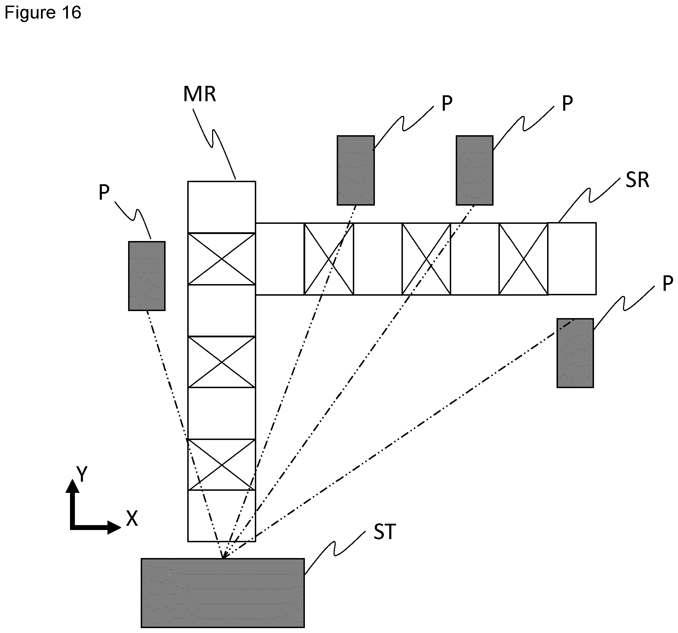

After step S124, the user operates the terminal device 10 to input definition items for defining a cable to be routed. The definition items are the items of the cable definition information illustrated in Figure 11. Specifically, the definition items include a name of the cable, a specification of a start point and an end point, a type of the cable, presence or absence of a specification of redundancy, a width dimension, and the like. Here, an operation screen when the routing is defined will be described. Figure 16 is a diagram illustrating an operation screen when a cable to be routed is defined.

As illustrated in Figure 16, when specifications of a cable to be routed are defined, a process of displaying a line connecting pieces of equipment to be connected by the cable routing in the virtual space is executed. By this process, a virtual line (two-dot-dash line) that connects the sub station ST and the plurality of pumps P is displayed.

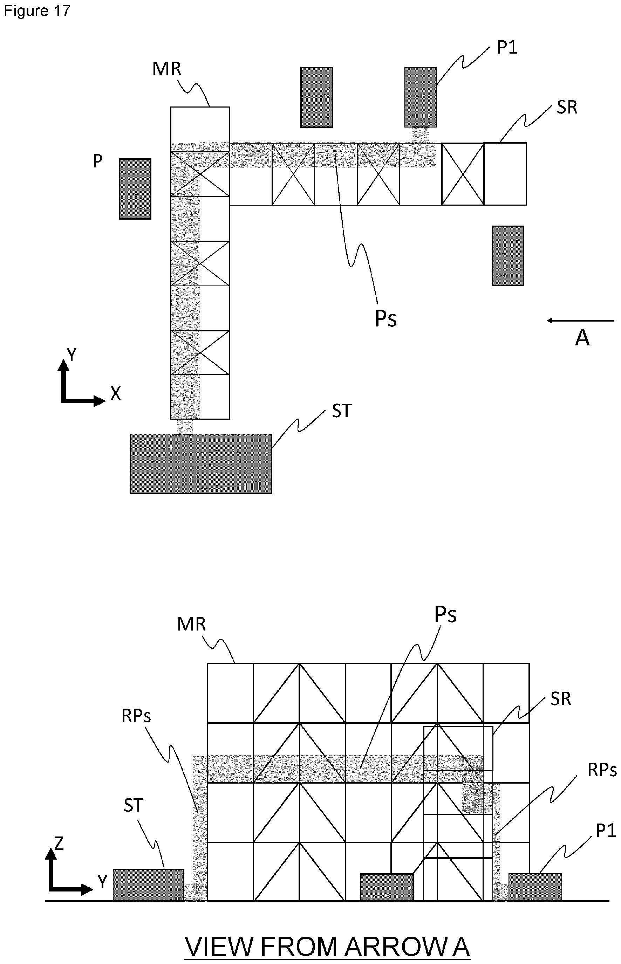

As illustrated in Figure 12, after step S115, the routing module 2038 sets a cable path according to the information concerning the positions of the pieces of equipment and the content of the definition items defined as the cable to be routed (step S125). Thus, a spatial path in which the cable is to be laid is provisionally set. Details of the set cable path are displayed in the virtual space. The operation screen on the terminal device 10 at this time will be described with reference to Figure 17. Figure 17 is a diagram illustrating an example of an operation screen on a terminal device 10 when a cable path is set.

In Figure 17, a hatched portion is a cable path Ps that indicates the spatial path in which the cable is to be laid. The cable path Ps starts from the sub station ST, passes through a third layer of the main rack MR from the top, and passes a third layer of the sub rack from the top, to be connected to a pump P1. The cable path Ps includes ladder paths RPs that extend in the vertical direction. In the example illustrated in Figure 17, the ladder paths RPs are formed at a portion that links the sub station ST to a third layer of the main rack MR and a portion that links a third layer of the sub rack SR to a pump P1.

As illustrated in Figure 12, after step S125, the user specifies a section part when necessary (step S116). The section part is a location of the cable path at which a cable tray is edited in a section of a rack. The user specifies a specific location of a rack arranged in the virtual space to specify the location as a section part. Note that the section part need not be specified.

After step S116, the server 20 receives information on a position of the section part specified by the user. Specifically, a process of recognizing a region that has been specified in the virtual space as the section part by the user as a section part in a subsequent process.

The server 20 sets, as the section part, a portion that is positioned immediately rearward of a piece of equipment in the cable path in a layer of the rack. Further, in a case where the cable tray has a portion at which a direction of the extension of the cable tray changes in the route of the cable tray that is determined in provisional routing described later, the server 20 sets the portion as the section part.

Next, with reference to Figure 13, a second half of the example of the process by the cable routing system 1 will be described. Figure 13 is a diagram illustrating the second half of the example of the process by the cable routing system 1.

As illustrated in Figure 13, after step S116, the user selects a section part to be included in the routing path when necessary (step S117). Specifically, in a case where there is a route in the set path through which the user intends to pass the cable, a section part is specified in the route. Note that the section part need not be selected.

After step S117, the server 20 performs the provisional routing (step S127). The provisional routing is a process of determining, in the set path, a route in which a cable tray for housing a cable is to be laid. Specifically, based on the position of the specified cable path and the positions of the start points and the end points of the set pieces of equipment, the routing module 2038 routes the cable tray to two selected pieces of equipment of the plurality of pieces of equipment. Here, the provisional routing of the cable tray is performed in such a manner that the cable tray passes through the set cable path. In the stage of the provisional routing, a detailed position relationship of the cable tray in the cable path has not been determined yet, and only the route of the cable tray is determined.

After step S127, the user edits a tray layout (step S118). The editing of the tray layout is a process of editing sizes and numbers of a plurality of cable trays included in the path, and an arrangement relationship among the plurality of cable trays. That is, the editing of the tray layout is performed on a plurality of cable trays included in the same cable path. The server 20 receives editing of a layout of the plurality of cable trays in a specified layer according to an operation.

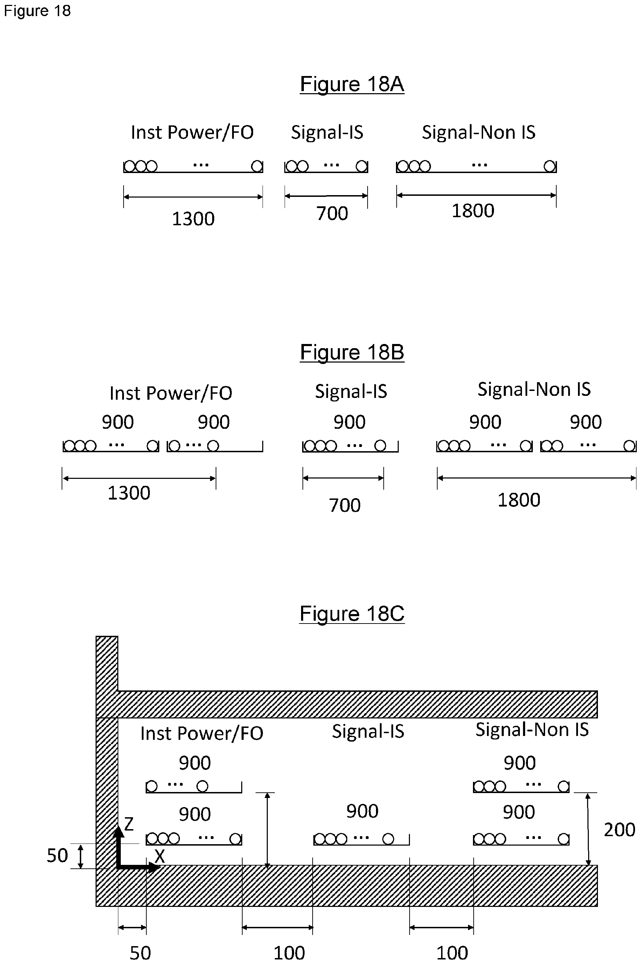

In the editing of the tray layout, the layout of the cable trays is edited in a section in a set section part. The set section part includes three types of locations: a location specified as a section part by a user; a location that is positioned immediately rearward of a piece of equipment in a cable path in a layer of a rack; and a location at which a direction of extension of a cable tray changes in a route of the cable tray that is determined in the provisional routing. Here, an editing operation of a tray layout will be described in detail with reference to Figure 18.

Figure 18 is a diagram illustrating an example of an operation screen in an editing process of a tray layout. This figure is drawn in sectional view orthogonal to a longitudinal direction of racks.

As illustrated in Figure 18A, the server 20 first calculates tray widths necessary for the section part with consideration given to sectional areas and the number of routed cables. In the calculation of the tray widths, cables that pass a target edit section part are extracted. Next, a tray group is set according to the following rules.

- When there are different tray groups in the item "Tray Group" in property information on the cables, the cables are grouped.
- When there are different redundancies in the item "Redundancy" in property information on the cables, the cables are grouped.

The server 20 then calculates a necessary tray width on a set-tray-group basis. In the example illustrated in Figure 18A, there are three groups "Inst Power/FO," "Signal-IS," and "Signal-Non IS" displayed as the tray groups. For each of the tray groups, a necessary width dimension of the tray is calculated.

Next, as illustrated in Figure 18B, a width dimension of a tray to be used that is input with the design parameter is referred to, and the tray is automatically laid out such that the tray satisfies a necessary tray width. In the case of the figure, use of 900-mm trays is selected in advance as the design parameter. In this case, for the tray group "Inst Power/FO" a necessary width dimension of which is 1300 mm, two 900-mm trays are laid out. For the tray group "Signal-IS" a necessary width dimension of which is 700 mm, two 900-mm trays are laid out. For the tray group "Signal-Non IS" a necessary width dimension of which is 1800 mm, two 900-mm trays are laid out. That is, the server 20 provisionally arranges the cable trays to be arranged in the layer based on the calculated necessary width dimensions.

As a concrete method of calculating a tray width, there are two calculation methods.

In a case where a cable type is "MV," "LV," "Control," or "Telecom," the necessary tray width is calculated by Equation (1) shown below.

$$\text{Necessary tray width} = (\text{Sum of cable diameters} + \text{Inter-cable spaces})/\text{Tolerable stacking number} \quad (1)$$

In a case where a cable type is "FO," "InstPower," and "Signal," the necessary tray width is calculated by Equation (2) shown below.

$$\text{Necessary tray width} = \text{Sum of cable sectional}$$

$$\text{areas}/(\text{Tray height} \times \text{Tolerable occupancy})$$

Here, in calculation of a sectional area of a cable, a section of the cable is approximated as a square.

By the calculation described above, the necessary tray width in each section part is calculated.

Next, the user edits a layout of the trays. Specifically, as illustrated in Figure 18C, the user inputs intervals between the cable trays and inputs arrangement positions of the cable trays in a section of the cable path. At this time, in the case where trays are stacked in a vertical direction, an interval between the trays in the vertical direction is also input. Dimensions input by the user include a dimension from a column of the rack. As seen from the above, the server 20 causes the terminal device 10 to display distances between a plurality of cable trays arranged in a layer in the editing of the layout.

Here, the longitudinal direction of the rack is set as an X direction, a width direction of the rack is set as a Y direction, and a height direction of the rack is set as a Z direction.

Origins are determined as follows.

- An origin in the Y direction is set to a column closer to an end of a rack, and an inward direction of the rack is set as a positive direction.
- Basically, an origin in the Z direction is set to be a zero height of a tier, and an upward direction is set as a positive direction.
  However, a user can make such a selection that a downward direction is set as the positive direction with a ceiling of an upper tier being set as the zero height. This is a case where, for example, a hanger support that supports a pipe tray is hung from a top surface of a layer of a rack.
- An origin of a cable tray is set to be a bottom end of the cable tray.

After step S127, the server 20 performs tray routing (step S128). In the tray routing, a cable tray is routed between two selected pieces of equipment in the edited tray layout. Specifically, the cable tray is routed in such a manner that the cable tray is extended from a section part serving as a starting point, along the longitudinal direction of the rack.

Next, as illustrated in Figure 13, the server 20 assigns cables to the routed cable tray (step S129). The assignment of cables is a process of specifying cables to be housed in the routed cable tray. Specifically, a type of the tray is treated by referring to layout information on the tray, the tray, and information in the cable definition DB.

At this time, in top view of a rack illustrated in Figure 17, end points are searched for clockwise, and the cable tray for housing cables is assigned in order of end points closer to the right.

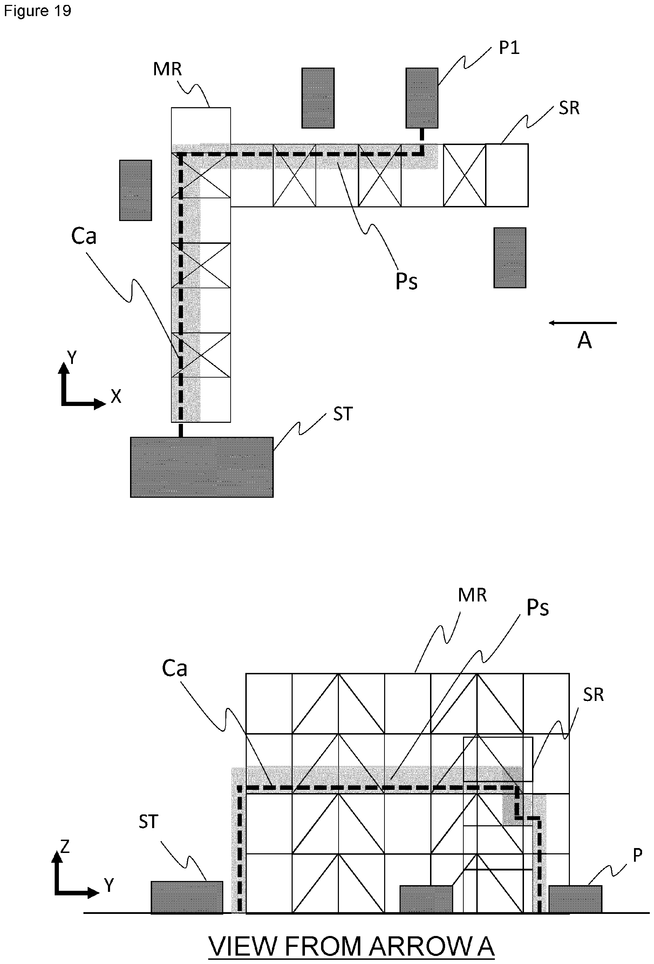

After step S129, the server 20 performs the cable routing (step S130). In the cable routing, a cable is routed to two pieces of equipment selected from among a plurality of pieces of equipment based on the position of the specified cable path, the information on the routed tray, the information on a cable to be housed in the tray, and the positions of the start points and the end points of the set pieces of equipment. The operation screen on the terminal device 10 at this time will be described with reference to Figure 19. Figure 19 is a diagram illustrating an example of the operation screen when a process of the routing is performed.

As illustrated in Figure 19, by performing the cable routing, a cable Ca that connects a sub station ST and a pump P1 is displayed. Although not illustrated, the cables are displayed in such a manner that a predetermined number of cables are housed in each cable tray. Thus, the process of the cable routing by the routing system is finished.

After step S130, a report is output by instructions issued to the terminal device 10 by the user. In the outputting of the report, a report in which a tray layout in each section part is drawn is output.

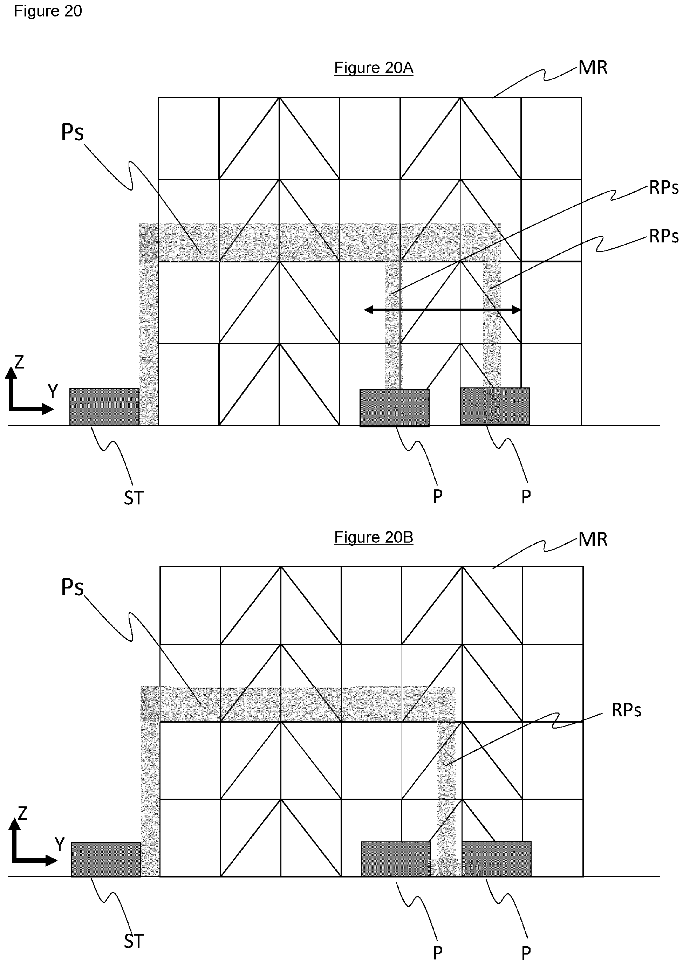

Next, editing of a ladder path will be described with reference to Figure 20. Figure 20 is a diagram illustrating an example of an operation screen in a process of editing a ladder path.

As illustrated in Figure 20A and Figure 20B, of ladder paths RPs, ladder paths arranged adjacent to one another can be integrated.

In addition, ladder paths can be separated as a plurality of ladder paths that are arranged spaced from one another in parallel.

In the tray routing, a cable tray housing a cable that extends farther among cables to be arranged in a cable path is arranged closer to a piece of equipment that is mounted in a rack and to which the cable is to be connected, in a vertical direction in a layer.

That is, in a case where cable trays are stacked, arranging a cable tray that extends farthest in a lowermost tier can reduce the number of support members for supporting the stacked cable trays. If a piece of equipment to which a cable is connected is positioned in a layer upper than a layer where the cable path is positioned, a support member of a hanging-type support member is used. Therefore, arranging a cable tray that extends farthest in an uppermost tier can reduce the number of support members.

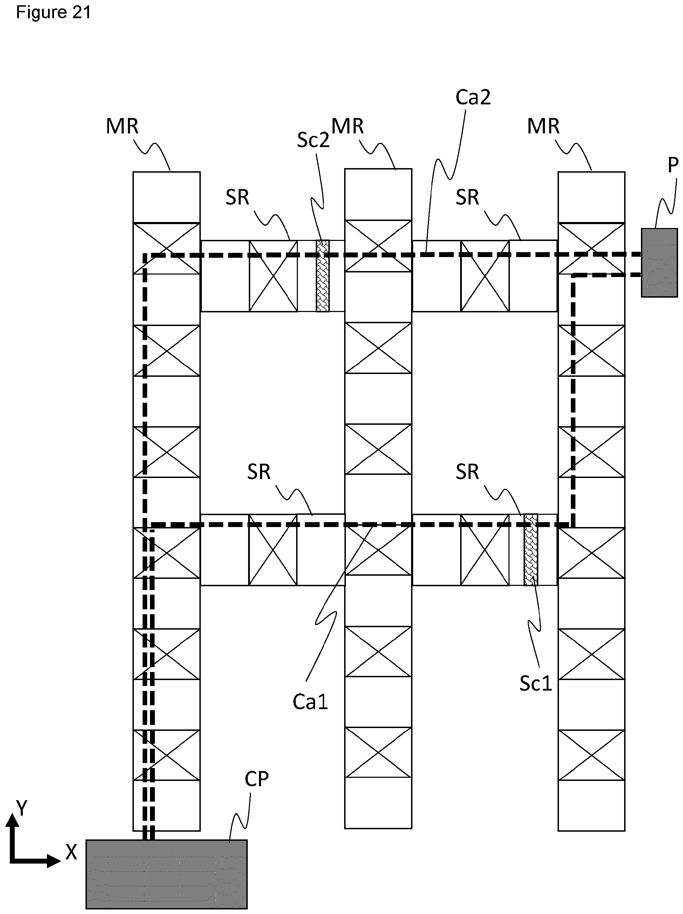

Next, a routing process in the case where a location desired by a user is selected as a section part in a path of routing a cable will be described with reference to Figure 21. Figure 21 is a diagram illustrating an example of an operation screen when the routing process is performed with the routing path including the section part specified. In Figure 21, CP denotes a control panel.

A case where two section parts Sc1 and Sc2 are selected in step S117 in Figure 13, as illustrated in Figure 21, will be described as an example. The case where the section parts are selected is, for example, a case where cables of the same type are grouped into two groups and laid in different paths to ensure redundancy. Even if a malfunction occurs in one of the cables due to an unexpected situation, such a selection enables normal operation with the other cable.

When the routing is performed with the two section parts Sc1 and Sc2 selected, two routes Ca1 and Ca2 that pass through the two section parts Sc1 and Sc2 are routed. Such a routing provides a degree of freedom in design of the routing.

As described above, the cable routing system 1 of the present embodiment receives a specification of a layer of a rack in which a cable is to be laid, sets a cable path that indicates a spatial path through which a cable is arranged, and routes a cable between two pieces of equipment that are selected from among a plurality of pieces of equipment arranged in a virtual space. Therefore, a routing route can be determined in a state where layer positions in a rack are grasped.

As a result, an operation of routing cables that connect various pieces of equipment can be examined for each tier of a rack.

After the process of routing cable trays is performed, the process of specifying cables to be housed is performed for each cable tray. As a result, cables of the same type can be routed while the cables are collectively housed in a tray, so that a plurality of cables can be routed efficiently.

The cable routing system 1 receives editing of a layout of a plurality of cable trays in a specified layer according to an operation by a user. As a result, the user can freely change a position relationship among cable trays in a layer, so that a degree of freedom can be provided to cable routing.

The cable routing system 1 displays distances between a plurality of cable trays arranged in a layer. As a result, convenience for a user when the user edits a layout of the cable trays can be ensured.

The cable routing system 1 calculates a necessary width dimension of a cable tray based on sectional areas and the number of cables to be arranged in a cable path. As a result, an area occupied by a necessary cable tray can be accurately grasped in a section of the cable path.

The cable routing system 1 provisionally arranges the cable trays to be arranged in the layer based on the calculated necessary width dimensions. As a result, an optimal arrangement of the cable trays can be performed efficiently when a user edits a layout of cable trays provisionally arranged.

When specifications of a cable to be routed are defined, the cable routing system 1 executes the process of displaying a line connecting pieces of equipment in a virtual space. As a result, how a cable is connected to pieces of equipment to be routed in a virtual space can be visually grasped.

The cable routing system 1 can execute the process of integrating together, from among ladder paths, ladder paths that are arranged adjacent to one another and execute the process of separating ladder paths as a plurality of ladder paths that are arranged spaced from one another in parallel. As a result, a degree of freedom can be provided in design of ladder paths.

<Modification>

Next, a modification of the cable routing will be described. In the embodiment, a specification of a layer in which a cable is to be laid is received, and then a cable path is set to the specified layer. In contrast, in a modification, a cable path can be set without specifying a layer to a rack. That is, in cable routing according to the modification, a cable can be routed without using a rack. A user can set a cable path at any position in a three-dimensional space. For example, a user may set a cable path on a rack.

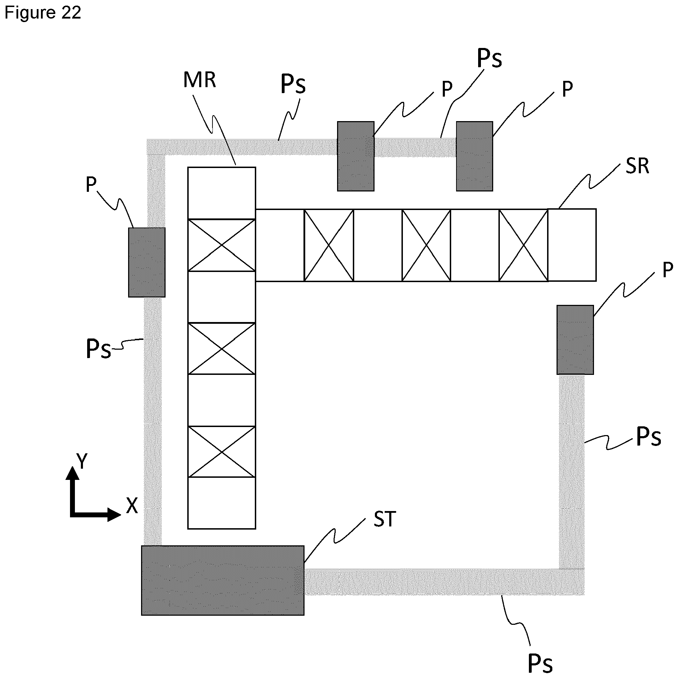

In a three-dimensional space illustrated in Figure 22, the processor receives an operation of arranging a cable path Ps at any location from a user. In this operation, the cable path Ps is displayed as, for example, an object that forms a rectangular parallelepiped shape, and the user can set any position, any size, and any direction to the object.

That is, in the modification, the setting of the cable path Ps illustrated in Figure 12 (step S125) is made by an input by the user. When the process of editing a tray layout (step S118) is received from a user after the edit section is specified (step S116), the cable path Ps set by the input by the user is edited by the processes described above, as with a cable path Ps that is automatically set on a rack.

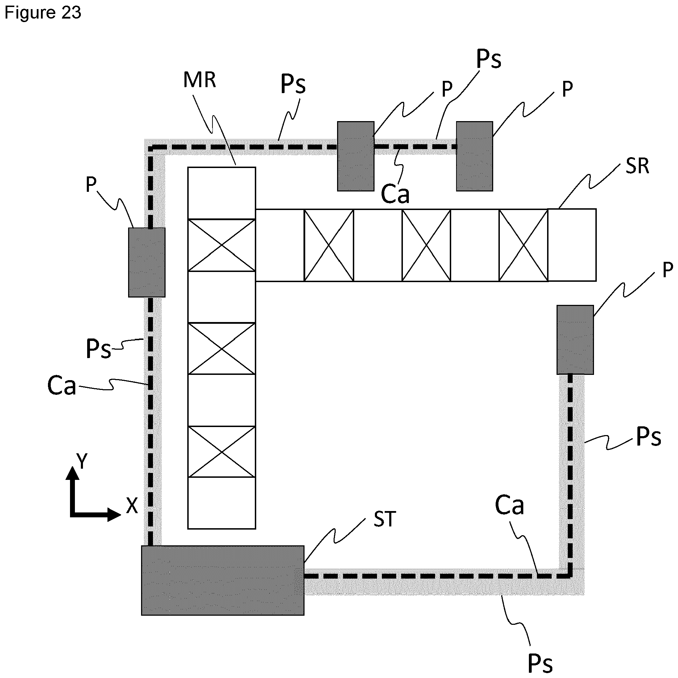

Subsequently, as illustrated in Figure 13, the processes from the tray routing (step S128) to the cable routing (step S130) are executed. As a result, a cable Ca is routed in the cable path Ps as illustrated in Figure 23.

As described above, in the cable routing according to the present modification, the cable routing is performed with a cable path that is set at any location by a user, so that a degree of freedom can be provided to a path in which a cable is routed. As a result, convenience for a user can be improved.

Note that a user may select one of routing in which a cable path is set by a specification of a layer in a rack described in the embodiment and routing in which a user directly sets a cable path.

The embodiment according to the disclosure are described above. This embodiment can be embodied in other various forms and can be embodied with various omissions, substitutions, and changes. This embodiment and modifications as well as those subjected to the omissions, substitutions, and changes are included in the technical scope of claims and the scope of equivalents thereof.

**[Reference Signs List]**

> 1 cable routing system 1
> 10 terminal device
> 20 server
> 80 network
> 130 operation receiving unit
> 161 user information
> 22 communication IF
> 23 input/output IF
> 25 memory
> 26 storage
> 29 processor
> 201 communication unit
> 202 storage unit
> 203 control unit
> 301 communication unit
> 302 storage unit
> 303 control unit

**Claims**

1. A program to be executed by a computer including a processor, the program being for designing a plant, the program causing the processor to execute:

> receiving an arrangement of a cable path at a given location in the virtual space, the cable path indicating a spatial path in which a cable is to be arranged;
> receiving, from a user, an operation of arranging a first object and a second object in the virtual space, the first object being a piece of equipment having a start point, the second object being a piece of equipment having an end point; and
> routing the cable to two of the pieces of equipment selected from among the plurality of pieces of equipment based on the cable path and positions of the start point and the end point.

2. A program to be executed by a computer including a processor, the program being for designing a plant, the program causing the processor to execute:

> receiving a specification of a position of a layer in which a cable is to be laid, the layer being in a rack placed in a virtual space;
> receiving, from a user, an operation of arranging a first object and a second object in the virtual space, the first object being a piece of equipment having a start point, the second object being a piece of equipment having an end point;
> determining the specified layer and setting a position of a cable path indicating a spatial path in which a cable is to be arranged; and
> routing the cable to two of the pieces of equipment selected from among the plurality of pieces of equipment based on the specified position of the cable path and positions of the start point and the end point of the set plurality of pieces of equipment.

3. The program according to claim 1 or 2, wherein

in routing the cable,
a process of routing a cable tray between two of the pieces of equipment selected, the cable tray being to house the cable, and
a process of specifying a cable to be housed in the routed cable tray
are performed.

4. The program according to claim 3, wherein in the process of routing the cable tray, a cable tray in which a cable having a longer laying distance among a plurality of cables to be arranged in the cable path is housed is arranged closer to a piece of equipment to which the cable is to be connected, in a vertical direction in the layer.

5. The program according to claim 3 or 4, wherein the program causes the processor to receive editing of a layout of a plurality of the cable trays in the specified layer according to an operation by a user.

6. The program according to claim 5, wherein in editing a layout of the cable trays, a process of displaying distances between a plurality of the cable trays arranged in the layer is executed.

7. The program according to any one of claims 3 to 6, wherein the program causes the processor to calculate a necessary width dimension of the cable tray based on sectional areas and a number of cables to be arranged in the cable path.

8. The program according to claim 7, wherein in editing a layout of the cable tray, the cable tray to be arranged in the layer is provisionally arranged based on the calculated necessary width dimension.

9. The program according to any one of claims 1 to 8, wherein in routing the cable, a process of displaying a line connecting the pieces of equipment in the virtual space is executed.

10. The program according to any one of claims 1 to 9, wherein

the cable path includes ladder paths that extend in a vertical direction, and
the program causes the processor to integrate, from among the ladder paths, ladder paths that are arranged adjacent to one another.

11. The program according to any one of claims 1 to 10, wherein

the cable path includes ladder paths that extend in a vertical direction, and
the program causes the processor to separate the ladder paths as a plurality of ladder paths that are arranged spaced from one another in parallel.

12. A method to be executed by a computer including a processor, the method being for designing a plant, wherein the processor executes:

receiving an arrangement of a cable path at a given location in the virtual space, the cable path indicating a spatial path in which a cable is to be arranged;
receiving, from a user, an operation of arranging a first object and a second object in the virtual space, the first object being a piece of equipment having a start point, the second object being a piece of equipment having an end point; and
routing the cable to two of the pieces of equipment selected from among the plurality of pieces of equipment based on the cable path and positions of the start point and the end point.

13. A system including a control unit, the system being for causing the control unit to execute a process of designing a plant, wherein
the control unit includes:

a module that receives an arrangement of a cable path at a given location in the virtual space, the cable path indicating a spatial path in which a cable is to be arranged;
a module that receives, from a user, an operation of arranging a first object and a second object in the virtual space, the first object being a piece of equipment having a start point, the second object being a piece of equipment having an end point; and

a module that routes the cable to two of the pieces of equipment selected from among the plurality of pieces of equipment based on the cable path and positions of the start point and the end point.

14. A method to be executed by a computer including a processor, the method being for designing a plant, the method causing the processor to perform:

receiving a specification of a position of a layer in which a cable is to be laid, the layer being in a rack placed in a virtual space;

receiving, from a user, an operation of arranging a first object and a second object in the virtual space, the first object being a piece of equipment having a start point, the second object being a piece of equipment having an end point;

determining the specified layer and setting a position of a cable path indicating a spatial path in which a cable is to be arranged; and

routing the cable to two of the pieces of equipment selected from among the plurality of pieces of equipment based on the specified position of the cable path and positions of the start point and the end point of the set plurality of pieces of equipment.

15. A system including a control unit, the system being for causing the control unit to execute a process of designing a processor, wherein

the control unit includes:

a module that receives a specification of a position of a layer in which a cable is to be laid, the layer being in a rack placed in a virtual space;

a module that receives, from a user, an operation of arranging a first object and a second object in the virtual space, the first object being a piece of equipment having a start point, the second object being a piece of equipment having an end point;

a module that determines the specified layer and sets a position of a cable path indicating a spatial path in which a cable is to be arranged; and

a module that routes the cable to two of the pieces of equipment selected from among the plurality of pieces of equipment based on the specified position of the cable path and positions of the start point and the end point of the set plurality of pieces of equipment.

Figure 1

Figure 2

Figure 3

Figure 4

EQUIPMENT DATABASE — 2021

| EQUIPMENT ID | EQUIPMENT NAME | BIM MODEL DATA |
|---|---|---|
| #0001 | PUMP (End-Top) | ET-A1-V-H-S.ifc |
| #0002 | HEAT EXCHANGER (SHELL-AND-TUBE TYPE) | HE-B1-1-G.ifc |
| #0003 | FILTER | FS-A2-2-S.ifc |
| #0101 | MAIN RACK | SS-A1-V-V.ifc |
| ... | SUB RACK | ... |
| ... | SUB STATION | .. |
| ... | COMPRESSOR | .. |
| ... | ... | .. |
| ... | ... | .. |
| ... | ... | .. |

DESIGN SPACE DATABASE — 2022

| SPACE ID | USER ID | IN-SPACE DESIGN INFORMATION | | |
|---|---|---|---|---|
| | | RELATIVE COORDINATES | ARRANGED OBJECT | DETAILED INFORMATION (PARAMETERS) |
| #0301 | #0402 | 800/600/0 | #0002 | ACCESS SPACE: 1400 |
| | | 100/0/20 | #0102 | ROUTE LENGTH: 3000 |
| #0302 | #0402 | 600/310/0 | #0001 | CABLE LENGTH: 2500 |
| | | 60/10/10 | #0101 | ROUTE LENGTH: 5500 |
| #0303 | #0403 | 350/420/0 | #0004 | NOZZLE HEIGHT 800 |
| | | 30/10/0 | #0104 | ROUTE LENGTH: 4800 |
| ... | ... | ... | ... | ... |

Figure 5

| CABLE DATABASE | | |
|---|---|---|
| CABLE TYPE | TRAY TYPE | PLACEMENT AREA |
| M V | M V | ELECTRICITY |
| L V | L V | ELECTRICITY |
| C o n t r o l | C o n t r o l | ELECTRICITY |
| T e l e c o m | T e l e c o m | ELECTRICITY |
| I n s t P o w e r | I n s t P o w e r _ F O | CONTROL |
| F O | | CONTROL |
| S i g n a l I S | S i g n a l I S | CONTROL |
| S i g n a l N o n - I S | S i g n a l N o n - I S | CONTROL |

2023

Figure 6

| ITEM | DEFAULT | INPUT METHOD |
|---|---|---|
| CABLE TRAY WIDTH DIMENSION | 300/600/900 | INTEGER |
| CABLE TRAY HEIGHT DIMENSION | 150 | INTEGER |
| CABLE TRAY LENGTH DIMENSION | 6000 | INTEGER |
| TOLERABLE STACKING NUMBER | 1 | 1or2 |
| TOLERABLE OCCUPANCY | 40% | 10－100 |
| FUTURE SPACE | 0% | 0－100 |
| INTER-CABLE SPACE | 0 mm | 0－500 |
| CABLE ARRANGEMENT PATTERN | trefoil | torefoil/flat formation |
| DISTANCE TO PIPE RACK | 300 | INTEGER |

Figure 7

| EQUIPMENT NAME | PLACEMENT LOCATION |
|---|---|
| Pump | PlatPlan |
| AFC | PlatPlan |
| MotorOperatedValue | PlatPlan |
| Compressor | PlatPlan |
| Skid | PlatPlan |
| Substation | ELECTRICITY |
| LocalPanel | ELECTRICITY |
| PowerjunctionBox | ELECTRICITY |
| LocalControlStation | ELECTRICITY |
| WeldingOutlet | ELECTRICITY |
| LocalInstrumentRoom | INSTRUMENTATION |
| JunctionBox | INSTRUMENTATION |
| Shelter | INSTRUMENTATION |
| JunctionPoint | INSTRUMENTATION |
| Dummy | ELECTRICITY/ INSTRUMENTATION |

Figure 8

2024

| PARAMETER INFORMATION DATABASE | |
|---|---|
| CABLE TRAY WIDTH DIMENSION | ... |
| CABLE TRAY HEIGHT DIMENSION | ... |
| CABLE TRAY LENGTH DIMENSION | ... |
| TOLERABLE STACKING NUMBER | ... |
| TOLERABLE OCCUPANCY | ... |
| FUTURE SPACE | ... |
| INTER-CABLE SPACE | ... |
| CABLE ARRANGEMENT PATTERN | ... |
| DISTANCE TO PIPE RACK | ... |

Figure 9

2025

| RACK POSITION INFORMATION DATABASE | | | | |
|---|---|---|---|---|
| RACK NAME | POSITION COORDINATES | SIZE | LAYER NUMBER | LAYER REGION |
| ... | ... | ... | ... | ... |
| ... | ... | ... | ... | ... |
| ... | ... | ... | ... | ... |

Figure 10

| EQUIPMENT POSITION INFORMATION DATABASE | | | | | | |
|---|---|---|---|---|---|---|
| EQUIPMENT ID | EQUIPMENT TYPE | POSITION COORDINATES | START POINT NAME | START POINT COORDINATES | END POINT NAME | END POINT COORDINATES |
| ... | ... | ... | ... | ... | ... | ... |
| ... | ... | ... | ... | ... | ... | ... |
| ... | ... | ... | ... | ... | ... | ... |
| ... | ... | ... | ... | ... | ... | ... |
| ... | ... | ... | ... | ... | ... | ... |
| ... | ... | ... | ... | ... | ... | ... |
| ... | ... | ... | ... | ... | ... | ... |
| ... | ... | ... | ... | ... | ... | ... |
| ... | ... | ... | ... | ... | ... | ... |

2026

Figure 11

2027

| CABLE DEFINITION INFORMATION DATABASE | | | | | | | | |
|---|---|---|---|---|---|---|---|---|
| CABLE ID | Tag | From | To | Type | Redundant | Width | Core | Power |
| … | … | … | … | … | … | … | … | … |
| … | … | … | … | … | … | … | … | … |
| … | … | … | … | … | … | … | … | … |
| … | … | … | … | … | … | … | … | … |
| … | … | … | … | … | … | … | … | … |
| … | … | … | … | … | … | … | … | … |
| … | … | … | … | … | … | … | … | … |

Figure 12

TERMINAL DEVICE 10    SERVER 20

START    START

S111
INPUT
PARAMETERS

S121
SET
PARAMETERS

S112
SPECIFY RACK
POSITION

S122
RECEIVE RACK
POSITION

S113
SPECIFY POSITION
OF LAYER

S123
RECEIVE POSITION
OF LAYER

S114
SPECIFY POSITION
OF EQUIPMENT

S124
RECEIVE POSITION
OF EQUIPMENT

S115
DEFINE CABLE
TO BE ROUTED

S125
SET CABLE PATH

S116
SPECIFY EDIT
SECTION

S126
SET EDIT
SECTION

A    B

Figure 13

TERMINAL DEVICE 10                    SERVER 20

A                                     B

S117
SELECT EDIT
SECTION AS
ROUTING PATH

S127
PERFORM PROVISIONAL
ROUTING

S118
EDIT TRAY
LAYOUT

S128
PERFORM TRAY
ROUTING

S129
ASSIGN CABLE
TO TRAY

S130
PERFORM
CABLE ROUTING

S131
OUTPUT
REPORT

END                                   END

Figure 14

B2

B3

B

| LAYER 4<br>HEIGHT:<br>4000 mm | COLUMN WIDTH:<br>125 mm | WIDTH: mm<br>PROCESS PIPE | ... | COLUMN WIDTH:<br>125 mm |
| | | OCCUPANCY: 50% | | |
| LAYER 3<br>HEIGHT:<br>4000 mm | COLUMN WIDTH:<br>125 mm | WIDTH: mm<br>ELECTRIC CABLE | ... | COLUMN WIDTH:<br>125 mm |
| | | OCCUPANCY: 50% | | |
| LAYER 2<br>HEIGHT:<br>4000 mm | COLUMN WIDTH:<br>125 mm | WIDTH: mm<br>UTILITY PIPE | ... | COLUMN WIDTH:<br>125 mm |
| | | OCCUPANCY: 65% | | |
| LAYER 1<br>HEIGHT:<br>4000 mm | COLUMN WIDTH:<br>125 mm | WIDTH: mm<br>SIGNAL CABLE | ... | COLUMN WIDTH:<br>125 mm |
| | | OCCUPANCY: 30% | | |

Z
X

Figure 15

Figure 16

Figure 17

VIEW FROM ARROW A

Figure 18

## Figure 18A

Inst Power/FO     Signal-IS     Signal-Non IS

1300     700     1800

## Figure 18B

Inst Power/FO     Signal-IS     Signal-Non IS

900  900     900     900  900

1300     700     1800

## Figure 18C

Inst Power/FO     Signal-IS     Signal-Non IS

900               900

900     900     900

200

Z   X

50

50     100     100

Figure 19

VIEW FROM ARROW A

Figure 20

Figure 20A

Figure 20B

Figure 21

Figure 22

Figure 23

## INTERNATIONAL SEARCH REPORT

| International application No. |
| --- |
| **PCT/JP2021/043466** |

### A. CLASSIFICATION OF SUBJECT MATTER

*G06Q 50/04*(2012.01)i; *G06F 30/18*(2020.01)i; *G06F 113/14*(2020.01)n
FI:    G06F30/18; G06Q50/04; G06F113:14

According to International Patent Classification (IPC) or to both national classification and IPC

### B. FIELDS SEARCHED

Minimum documentation searched (classification system followed by classification symbols)

G06Q50/04; G06F30/18; G06F113/14

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

IEEE Xplore; JSTPlus (JDreamIII)

### C. DOCUMENTS CONSIDERED TO BE RELEVANT

| Category* | Citation of document, with indication, where appropriate, of the relevant passages | Relevant to claim No. |
| --- | --- | --- |
| X | JP 2018-73228 A (FUJITSU LTD.) 10 May 2018 (2018-05-10) | 1, 12-13 |
|   | paragraphs [0030]-[0035], [0049], [0058], [0076]-[0098], fig. 4, 11-13 | |
| Y |   | 3-11 |
| A |   | 2, 14-15 |
| Y | JP 2000-192528 A (HITACHI PLANT ENG. & CONSTR. CO., LTD.) 11 July 2000 (2000-07-11) | 3-6, 10-11 |
|   | paragraphs [0011]-[0025] | |
| A |   | 2, 14-15 |
| Y | JP 2018-142312 A (MITSUBISHI HEAVY IND., LTD.) 13 September 2018 (2018-09-13) | 3-8 |
|   | paragraphs [0185]-[0291] | |
| A |   | 2, 14-15 |
| Y | JP 2018-28861 A (DENSOKU KK) 22 February 2018 (2018-02-22) | 9 |
|   | paragraph [0050] | |
| A |   | 2, 14-15 |

☐ Further documents are listed in the continuation of Box C.          ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **07 February 2022** | **15 February 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/043466**

| Patent document cited in search report | | | Publication date (day/month/year) | Patent family member(s) | Publication date (day/month/year) |
|---|---|---|---|---|---|
| JP | 2018-73228 | A | 10 May 2018 | (Family: none) | |
| JP | 2000-192528 | A | 11 July 2000 | (Family: none) | |
| JP | 2018-142312 | A | 13 September 2018 | (Family: none) | |
| JP | 2018-28861 | A | 22 February 2018 | (Family: none) | |

Form PCT/ISA/210 (patent family annex) (January 2015)

**EP 4 258 201 A1**

**Patent documents cited in the description**

- JP 2019106141 A